(19) **Europäisches Patentamt European Patent Office Office européen des brevets**

(11) **EP 4 489 496 A1**

(12) **EUROPEAN PATENT APPLICATION**
published in accordance with Art. 153(4) EPC

(43) Date of publication:
**08.01.2025 Bulletin 2025/02**

(21) Application number: **23763700.4**

(22) Date of filing: **02.03.2023**

(51) International Patent Classification (IPC):
*H04W 72/04* (2023.01)        *H04W 72/54* (2023.01)
*H04W 84/12* (2009.01)        *H04B 7/0413* (2017.01)
*H04L 1/00* (2006.01)         *H04L 5/00* (2006.01)
*H04W 72/23* (2023.01)

(52) Cooperative Patent Classification (CPC):
**H04B 7/0413; H04L 1/00; H04L 5/00; H04W 72/04; H04W 72/23; H04W 72/54; H04W 84/12**

(86) International application number:
**PCT/KR2023/002850**

(87) International publication number:
**WO 2023/167501 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.03.2022 KR 20220027012**
             **26.05.2022 KR 20220064887**

(71) Applicant: **LG Electronics Inc.**
**Yeongdeungpo-gu**
**Seoul 07336 (KR)**

(72) Inventors:
• **LIM, Dongguk**
  **Seoul 06772 (KR)**
• **CHUN, Jinyoung**
  **Seoul 06772 (KR)**
• **CHOI, Jinsoo**
  **Seoul 06772 (KR)**
• **PARK, Eunsung**
  **Seoul 06772 (KR)**
• **JUNG, Insik**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR REQUESTING FEEDBACK OF SOME BANDS THROUGH NDPA FRAME FOR BANDS EXCEEDING 320MHZ IN WLAN SYSTEM**

(57)     A method and a device for transmitting a feedback frame in a wireless LAN system are proposed. Specifically, a receiving STA receives an NDPA frame from a transmitting STA over a wide band. The receiving STA receives an NDP frame from the transmitting STA. The receiving STA transmits a feedback frame to the transmitting STA on the basis of the NDPA frame and the NDP frame. The NDPA frame includes an STA information field for the receiving STA. The STA information field includes information about some bands and a reserved bit. When the wideband has a bandwidth exceeding 320 MHz, the reserved bit is set to 1, and a channel unit requesting feedback information is set to 80 MHz.

FIG. 23

transmitting, by a transmitting station (STA), a null data packet announcement (NDPA) frame to a receiving STA through a wideband — S2310

transmitting, by the transmitting STA, an NDP frame to the receiving STA — S2320

receiving, by the transmitting STA, a feedback frame based on the NDPA frame and the NDP frame from the receiving STA — S2330

EP 4 489 496 A1

**Description**

**TECHNICAL FIELD**

The present specification relates to a technique for transmitting a feedback frame based on an NDPA frame in a WLAN system, and more particularly, to a method and apparatus for requesting feedback of a partial band in units of 80 MHz channels using a Reserved bit of an NDPA frame for a band exceeding 320 MHz.

**BACKGROUND ART**

A wireless local area network (WLAN) has been improved in various ways. For example, the IEEE 802.11ax standard proposed an improved communication environment using orthogonal frequency division multiple access (OFDMA) and downlink multi-user multiple input multiple output (DL MU MIMO) techniques.

The present specification proposes a technical feature that can be utilized in a new communication standard. For example, the new communication standard may be an extreme high throughput (EHT) standard which is currently being discussed. The EHT standard may use an increased bandwidth, an enhanced PHY layer protocol data unit (PPDU) structure, an enhanced sequence, a hybrid automatic repeat request (HARQ) scheme, or the like, which is newly proposed. The EHT standard may be called the IEEE 802.11be standard.

In a new WLAN standard, an increased number of spatial streams may be used. In this case, in order to properly use the increased number of spatial streams, a signaling technique in the WLAN system may need to be improved.

**DISCLOSURE**

**TECHNICAL PROBLEM**

The present specification proposes a method and apparatus for requesting feedback for a partial band exceeding 320 MHz through an NDPA frame in a wireless LAN system.

**TECHNICAL SOLUTION**

An example of the present specification proposes a method for requesting feedback for a partial band exceeding 320 MHz through an NDPA frame.

The present embodiment may be performed in a network environment in which a next generation WLAN system (IEEE 802.11be or EHT WLAN system) is supported. The next generation wireless LAN system is a WLAN system that is enhanced from an 802.11ax system and may, therefore, satisfy backward compatibility with the 802.11ax system.

This embodiment is performed in a receiving STA, and the receiving STA may correspond to a beamformee or at least one STA (station). A transmitting STA may correspond to a beamformer or an access point (AP).

This embodiment proposes a method of configuring a STA Info field (or Partial BW Info field) of an NDPA frame to perform a sounding procedure for a band exceeding 320 MHz and to request channel state feedback for a portion of the band exceeding 320 MHz.

A transmitting station (STA) transmits a Null Data Packet Announcement (NDPA) frame to a receiving STA through a wideband.

The transmitting STA transmits an NDP frame to the receiving STA.

The transmitting STA receives a feedback frame based on the NDPA frame and the NDP frame from the receiving STA.

The NDPA frame includes a STA information field for the receiving STA. The STA information field includes information on a partial band, and a Reserved bit. The Reserved bit may be set to a B20 bit (or one of a B29 bit and a B31 bit) of the STA information field.

If/Based on the wideband has/having a bandwidth exceeding 320 MHz, the Reserved bit is set to 1, and the channel unit requesting feedback information is set to 80 MHz.

The information on the partial band includes a bitmap consisting of first to ninth bits. The second to ninth bits are used to request feedback information for the lowest frequency 80 MHz channel to the highest frequency 80 MHz channel in the wideband.

That is, the present embodiment proposes a method of reusing the NDPA frame defined in 802.11be (specifically, the Partial BW Info field and the Reserved bit of a STA Info field of an EHT NDPA frame) even for a band exceeding 320 MHz. In particular, the present embodiment proposes a method of requesting channel state feedback for the partial band by using a different subchannel resolution by using the Reserved bit in the NDPA frame.

## ADVANTAGEOUS EFFECTS

According to the embodiment proposed in this specification, the beamformer can request and receive channel state feedback for the partial band even for the wideband exceeding 320 MHz, so that it can efficiently support Multi-Input Multi-Output (MIMO) beamforming, and the effect of improving the throughput of the entire system can occur. In addition, the effect of performing efficient sounding procedures and signal transmission/reception through OFDMA can also occur through this embodiment.

## BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 illustrates an example of a PPDU used in an IEEE standard.
FIG. 5 illustrates a layout of resource units (RUs) used in a band of 20 MHz.
FIG. 6 illustrates a layout of RUs used in a band of 40 MHz.
FIG. 7 illustrates a layout of RUs used in a band of 80 MHz.
FIG. 8 illustrates a structure of an HE-SIG-B field.
FIG. 9 illustrates an example in which a plurality of user STAs are allocated to the same RU through a MU-MIMO scheme.
FIG. 10 illustrates an example of a PPDU used in the present specification.
FIG. 11 illustrates an example of a modified transmission device and/or receiving device of the present specification.
FIG. 12 shows an example of EHT non-TB sounding.
FIG. 13 shows an example of EHT TB sounding.
FIG. 14 shows an example of an EHT NDP Announcement frame format.
FIG. 15 shows channelization and extended channelization of the 6 GHz band of the 802.11be wireless LAN system.
FIG. 16 shows an example of a Partial BW info field included in a STA info field of a newly defined NDPA frame in a next-generation wireless LAN system.
FIG. 17 shows an example of a STA info field including the partial BW info field of FIG. 16.
FIG. 18 shows another example of a STA info field of a newly defined NDPA frame in a next-generation wireless LAN system.
FIG. 19 shows another example of a Partial BW info field included in a STA info field of a newly defined NDPA frame in a next-generation wireless LAN system.
FIG. 20 shows another example of a Partial BW info field included in a STA info field of a newly defined NDPA frame in a next-generation wireless LAN system.
FIG. 21 is a flowchart illustrating the operation of the transmitting apparatus/device according to the present embodiment.
FIG. 22 is a flowchart illustrating the operation of the receiving apparatus/device according to the present embodiment.
FIG. 23 is a flow diagram illustrating a procedure for receiving a feedback frame by a transmitting STA according to the present embodiment.
FIG. 24 is a flow diagram illustrating a procedure for transmitting a feedback frame by a receiving STA according to the present embodiment.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (EHT-signal)", it may denote that "EHT-signal" is proposed as an example of the "control information". In other words, the "control information" of the present specification is not limited to "EHT-signal", and "EHT-signal" may be proposed as an example of the "control information". In addition, when indicated as "control information (i.e., EHT-signal)", it may also mean that "EHT-signal" is proposed as an example of the "control information".

Technical features described individually in one figure in the present specification may be individually implemented, or may be simultaneously implemented.

The following example of the present specification may be applied to various wireless communication systems. For example, the following example of the present specification may be applied to a wireless local area network (WLAN) system. For example, the present specification may be applied to the IEEE 802.11a/g/n/ac standard or the IEEE 802.11ax standard. In addition, the present specification may also be applied to the newly proposed EHT standard or IEEE 802.11be standard. In addition, the example of the present specification may also be applied to a new WLAN standard enhanced from the EHT standard or the IEEE 802.11be standard. In addition, the example of the present specification may be applied to a mobile communication system. For example, it may be applied to a mobile communication system based on long term evolution (LTE) depending on a $3^{rd}$ generation partnership project (3GPP) standard and based on evolution of the LTE. In addition, the example of the present specification may be applied to a communication system of a 5G NR standard based on the 3GPP standard.

Hereinafter, in order to describe a technical feature of the present specification, a technical feature applicable to the present specification will be described.

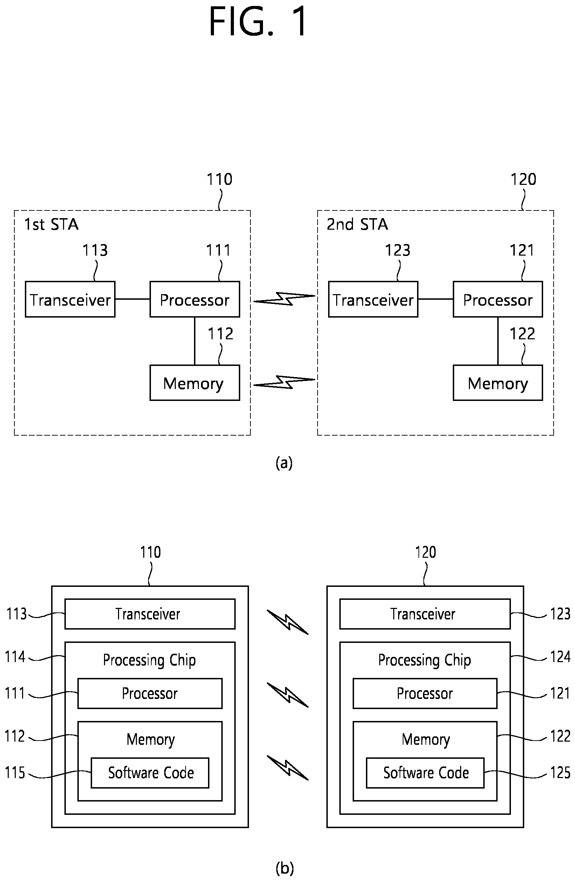

FIG. 1 shows an example of a transmitting apparatus and/or receiving apparatus of the present specification.

In the example of FIG. 1, various technical features described below may be performed. FIG. 1 relates to at least one station (STA). For example, STAs 110 and 120 of the present specification may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present specification may also be called in various terms such as a network, a base station, a node-B, an access point (AP), a repeater, a router, a relay, or the like. The STAs 110 and 120 of the present specification may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present specification may serve as the AP and/or the non-AP.

The STAs 110 and 120 of the present specification may support various communication standards together in addition to the IEEE 802.11 standard. For example, a communication standard (e.g., LTE, LTE-A, 5G NR standard) or the like based on the 3GPP standard may be supported. In addition, the STA of the present specification may be implemented as various devices such as a mobile phone, a vehicle, a personal computer, or the like. In addition, the STA of the present specification may support communication for various communication services such as voice calls, video calls, data communication, and self-driving (autonomous-driving), or the like.

The STAs 110 and 120 of the present specification may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the specification described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the specification described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the specification described below, a device called a (transmitting/receiving) STA, a first STA, a second STA, a STA1, a STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/-configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/-subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present specification will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present specification may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm®, EXYNOSTM series of processors made by Samsung@, A series of processors made by Apple@, HELIOTM series of processors made by MediaTek®, ATOMTM series of processors made by Intel@ or processors enhanced from these processors.

In the present specification, an uplink may imply a link for communication from a non-AP STA to an SP STA, and an uplink PPDU/packet/signal or the like may be transmitted through the uplink. In addition, in the present specification, a downlink may imply a link for communication from the AP STA to the non-AP STA, and a downlink PPDU/packet/signal or the like may be transmitted through the downlink.

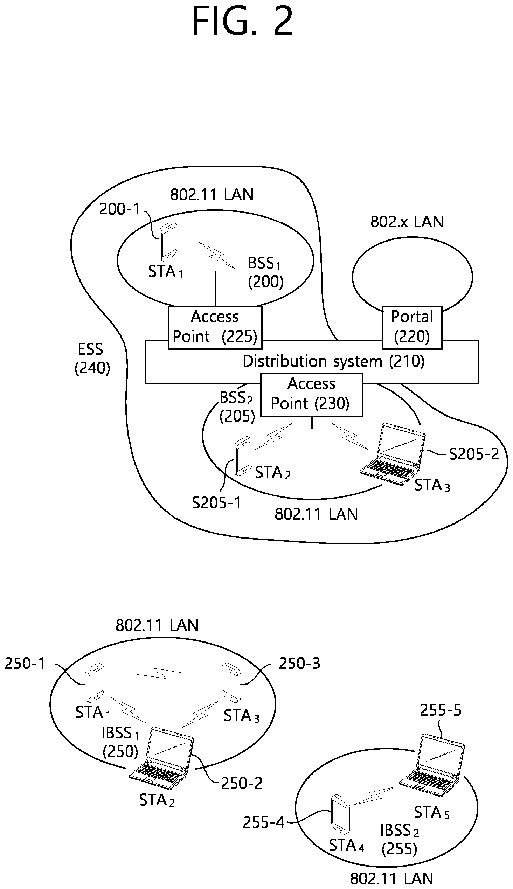

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and a STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, APs providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

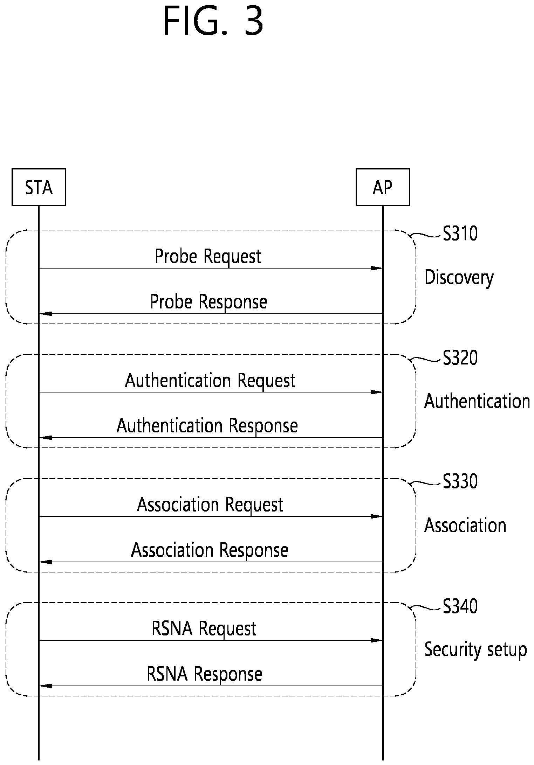

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information related to a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information related to an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information related to various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information related to various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

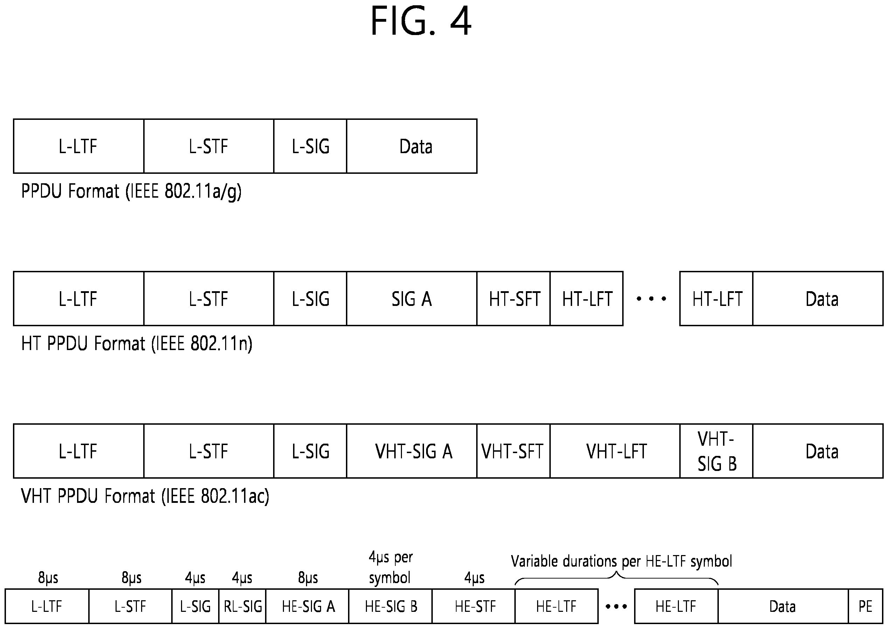

FIG. 4 illustrates an example of a PPDU used in an IEEE standard.

As illustrated, various types of PHY protocol data units (PPDUs) are used in IEEE a/g/n/ac standards. Specifically, an LTF and a STF include a training signal, a SIG-A and a SIG-B include control information for a receiving STA, and a data field includes user data corresponding to a PSDU (MAC PDU/aggregated MAC PDU).

FIG. 4 also includes an example of an HE PPDU according to IEEE 802.11ax. The HE PPDU according to FIG. 4 is an illustrative PPDU for multiple users. An HE-SIG-B may be included only in a PPDU for multiple users, and an HE-SIG-B may be omitted in a PPDU for a single user.

As illustrated in FIG. 4, the HE-PPDU for multiple users (MUs) may include a legacy-short training field (L-STF), a legacy-long training field (L-LTF), a legacy-signal (L-SIG), a high efficiency-signal A (HE-SIG A), a high efficiency-signal-B (HE-SIG B), a high efficiency-short training field (HE-STF), a high efficiency-long training field (HE-LTF), a data field (alternatively, an MAC payload), and a packet extension (PE) field. The respective fields may be transmitted for illustrated time periods (i.e., 4 or 8 $\mu$s).

Hereinafter, a resource unit (RU) used for a PPDU is described. An RU may include a plurality of subcarriers (or tones). An RU may be used to transmit a signal to a plurality of STAs according to OFDMA. Further, an RU may also be defined to transmit a signal to one STA. An RU may be used for an STF, an LTF, a data field, or the like.

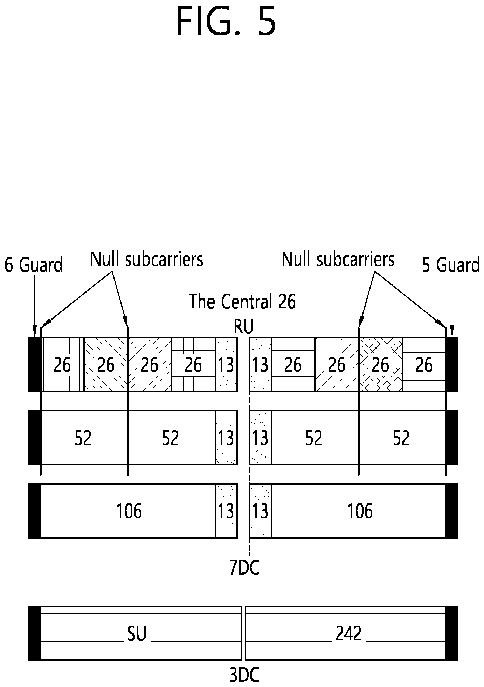

FIG. 5 illustrates a layout of resource units (RUs) used in a band of 20 MHz.

As illustrated in FIG. 5, resource units (RUs) corresponding to different numbers of tones (i.e., subcarriers) may be used to form some fields of an HE-PPDU. For example, resources may be allocated in illustrated RUs for an HE-STF, an HE-LTF, and a data field.

As illustrated in the uppermost part of FIG. 5, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

The layout of the RUs in FIG. 5 may be used not only for a multiple users (MUs) but also for a single user (SU), in which case one 242-unit may be used and three DC tones may be inserted as illustrated in the lowermost part of FIG. 5.

Although FIG. 5 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones).

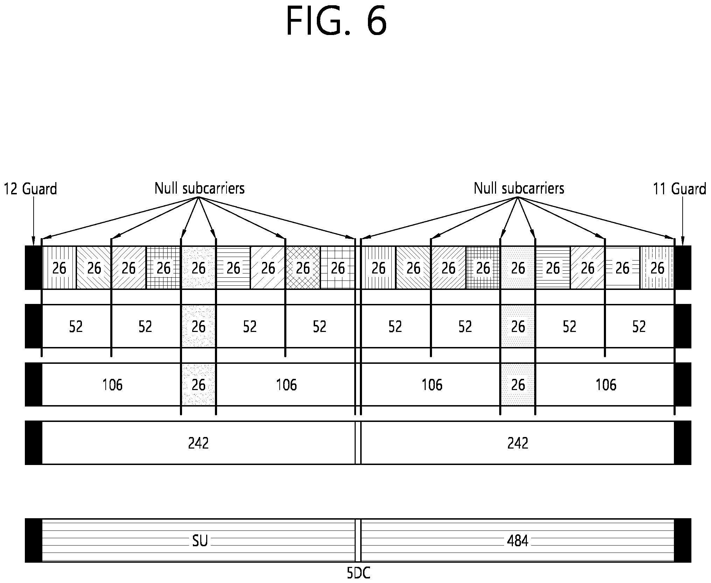

FIG. 6 illustrates a layout of RUs used in a band of 40 MHz.

Similarly to FIG. 5 in which RUs having various sizes are used, a 26-RU, a 52-RU, a 106-RU, a 242-RU, a 484-RU, and the like may be used in an example of FIG. 6. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 6, when the layout of the RUs is used for a single user, a 484-RU may be used. The specific number of RUs may be changed similarly to FIG. 5.

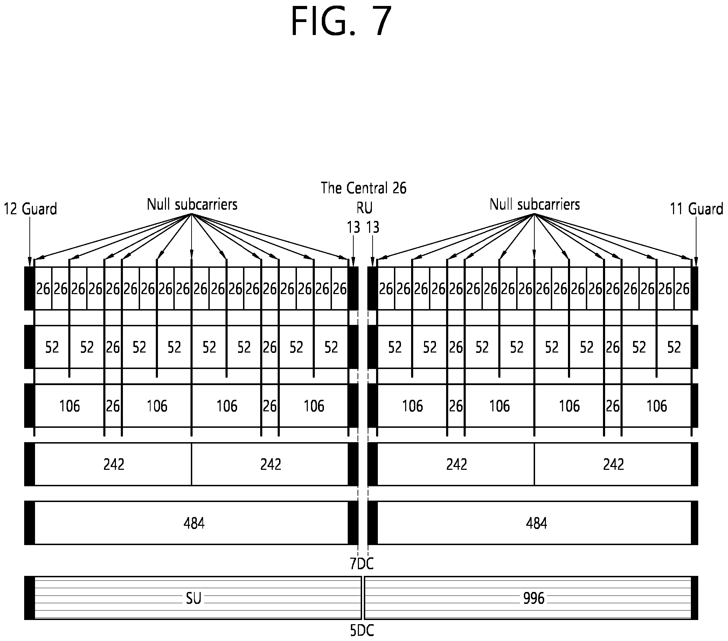

FIG. 7 illustrates a layout of RUs used in a band of 80 MHz.

Similarly to FIG. 5 and FIG. 6 in which RUs having various sizes are used, a 26-RU, a 52-RU, a 106-RU, a 242-RU, a 484-RU, a 996-RU, and the like may be used in an example of FIG. 7. Further, seven DC tones may be inserted in the center frequency, 12 tones may be used for a guard band in the leftmost band of the 80 MHz band, and 11 tones may be used for a guard band in the rightmost band of the 80 MHz band. In addition, a 26-RU corresponding to 13 tones on each of the left and right sides of the DC band may be used.

As illustrated in FIG. 7, when the layout of the RUs is used for a single user, a 996-RU may be used, in which case five DC tones may be inserted.

The RU described in the present specification may be used in uplink (UL) communication and downlink (DL) communication. For example, when UL-MU communication which is solicited by a trigger frame is performed, a transmitting STA (e.g., an AP) may allocate a first RU (e.g., 26/52/106/242-RU, etc.) to a first STA through the trigger frame, and may allocate a second RU (e.g., 26/52/106/242-RU, etc.) to a second STA. Thereafter, the first STA may transmit a first trigger-based PPDU based on the first RU, and the second STA may transmit a second trigger-based PPDU based on the second RU. The first/second trigger-based PPDU is transmitted to the AP at the same (or overlapped) time period.

For example, when a DL MU PPDU is configured, the transmitting STA (e.g., AP) may allocate the first RU (e.g., 26/52/106/242-RU. etc.) to the first STA, and may allocate the second RU (e.g., 26/52/106/242-RU, etc.) to the second STA. That is, the transmitting STA (e.g., AP) may transmit HE-STF, HE-LTF, and Data fields for the first STA through the first RU in one MU PPDU, and may transmit HE-STF, HE-LTF, and Data fields for the second STA through the second RU.

Information related to a layout of the RU may be signaled through HE-SIG-B.

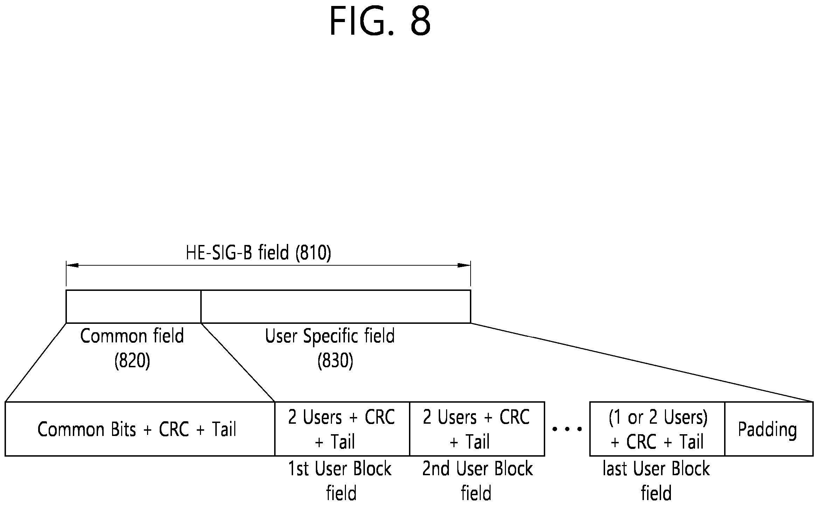

FIG. 8 illustrates a structure of an HE-SIG-B field.

As illustrated, an HE-SIG-B field 810 includes a common field 820 and a user-specific field 830. The common field 820 may include information commonly applied to all users (i.e., user STAs) which receive SIG-B. The user-specific field 830 may be called a user-specific control field. When the SIG-B is transferred to a plurality of users, the user-specific field 830 may be applied only any one of the plurality of users.

As illustrated in FIG. 8, the common field 820 and the user-specific field 830 may be separately encoded.

The common field 820 may include RU allocation information of N*8 bits. For example, the RU allocation information may include information related to a location of an RU. For example, when a 20 MHz channel is used as shown in FIG. 5, the RU allocation information may include information related to a specific frequency band to which a specific RU (26-RU/52-RU/106-RU) is arranged.

An example of a case in which the RU allocation information consists of 8 bits is as follows.

[Table 1]

| RU Allocation subfield (B7 B6 B5 B4 B3 B2 B1 B0) | #1 | #2 | #3 | #4 | #5 | #6 | #7 | #8 | #9 | Number of entries |
|---|---|---|---|---|---|---|---|---|---|---|
| 00000000 | 26 | 26 | 26 | 26 | 26 | 26 | 26 | 26 | 26 | 1 |
| 00000001 | 26 | 26 | 26 | 26 | 26 | 26 | 26 | 52 | | 1 |
| 00000010 | 26 | 26 | 26 | 26 | 26 | 52 | | 26 | 26 | 1 |

(continued)

| RU Allocation subfield (B7 B6 B5 B4 B3 B2 B1 B0) | #1 | #2 | #3 | #4 | #5 | #6 | #7 | #8 | #9 | Number of entries |
|---|---|---|---|---|---|---|---|---|---|---|
| 00000011 | 26 | 26 | 26 | 26 | 26 | 52 | | 52 | | 1 |
| 00000100 | 26 | 26 | 52 | | 26 | 26 | 26 | 26 | 26 | 1 |
| 00000101 | 26 | 26 | 52 | | 26 | 26 | 26 | 52 | | 1 |
| 00000110 | 26 | 26 | 52 | | 26 | 52 | | 26 | 26 | 1 |
| 00000111 | 26 | 26 | 52 | | 26 | 52 | | 52 | | 1 |
| 00001000 | 52 | | 26 | 26 | 26 | 26 | 26 | 26 | 26 | 1 |
| 00001001 | 52 | | 26 | 26 | 26 | 26 | 26 | 52 | | 1 |
| 00001010 | 52 | | 26 | 26 | 26 | 52 | | 26 | 26 | 1 |

As shown the example of FIG. 5, up to nine 26-RUs may be allocated to the 20 MHz channel. When the RU allocation information of the common field 820 is set to "00000000" as shown in Table 1, the nine 26-RUs may be allocated to a corresponding channel (i.e., 20 MHz). In addition, when the RU allocation information of the common field 820 is set to "00000001" as shown in Table 1, seven 26-RUs and one 52-RU are arranged in a corresponding channel. That is, in the example of FIG. 5, the 52-RU may be allocated to the rightmost side, and the seven 26-RUs may be allocated to the left thereof.

The example of Table 1 shows only some of RU locations capable of displaying the RU allocation information.

For example, the RU allocation information may include an example of Table 2 below.

[Table 2]

| 8 bits indices (B7 B6 B5 B4 B3 B2 B1 B0) | #1 | #2 | #3 | #4 | #5 | #6 | #7 | #8 | #9 | Number of entries |
|---|---|---|---|---|---|---|---|---|---|---|
| $01000y_2y_1y_0$ | 106 | | | | 26 | 26 | 26 | 26 | 26 | 8 |
| $01001y_2y_1y_0$ | 106 | | | | 26 | 26 | 26 | 52 | | 8 |

"$01000y_2y_1y_0$" relates to an example in which a 106-RU is allocated to the leftmost side of the 20 MHz channel, and five 26-RUs are allocated to the right side thereof. In this case, a plurality of STAs (e.g., user-STAs) may be allocated to the 106-RU, based on a MU-MIMO scheme. Specifically, up to 8 STAs (e.g., user-STAs) may be allocated to the 106-RU, and the number of STAs (e.g., user-STAs) allocated to the 106-RU is determined based on 3-bit information ($y_2y_1y_0$). For example, when the 3-bit information ($y_2y_1y_0$) is set to N, the number of STAs (e.g., user-STAs) allocated to the 106-RU based on the MU-MIMO scheme may be N+1.

In general, a plurality of STAs (e.g., user STAs) different from each other may be allocated to a plurality of RUs. However, the plurality of STAs (e.g., user STAs) may be allocated to one or more RUs having at least a specific size (e.g., 106 subcarriers), based on the MU-MIMO scheme.

As shown in FIG. 8, the user-specific field 830 may include a plurality of user fields. As described above, the number of STAs (e.g., user STAs) allocated to a specific channel may be determined based on the RU allocation information of the common field 820. For example, when the RU allocation information of the common field 820 is "00000000", one user STA may be allocated to each of nine 26-RUs (e.g., nine user STAs may be allocated). That is, up to 9 user STAs may be allocated to a specific channel through an OFDMA scheme. In other words, up to 9 user STAs may be allocated to a specific channel through a non-MU-MIMO scheme.

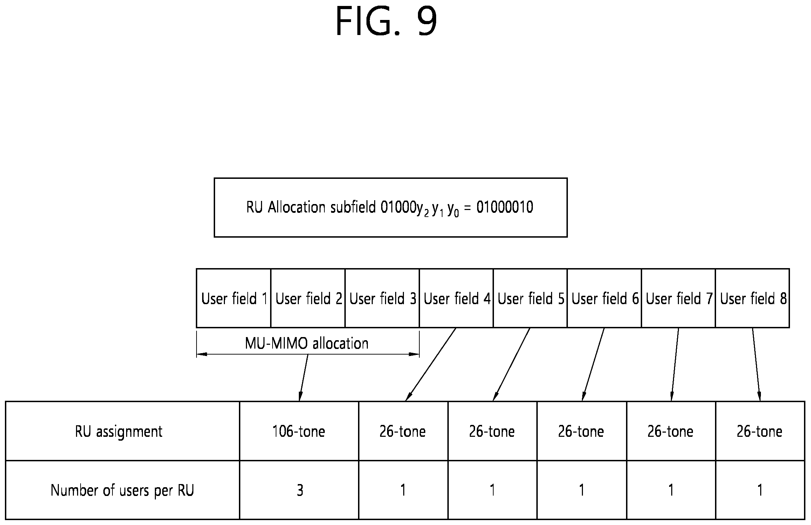

For example, when RU allocation is set to "$01000y_2y_1y_0$", a plurality of STAs may be allocated to the 106-RU arranged at the leftmost side through the MU-MIMO scheme, and five user STAs may be allocated to five 26-RUs arranged to the right side thereof through the non-MU MIMO scheme. This case is specified through an example of FIG. 9.

FIG. 9 illustrates an example in which a plurality of user STAs are allocated to the same RU through a MU-MIMO scheme.

For example, when RU allocation is set to "01000010" as shown in FIG. 9, a 106-RU may be allocated to the leftmost side of a specific channel, and five 26-RUs may be allocated to the right side thereof. In addition, three user STAs may be allocated to the 106-RU through the MU-MIMO scheme. As a result, since eight user STAs are allocated, the user-specific field 830 of HE-SIG-B may include eight user fields.

The eight user fields may be expressed in the order shown in FIG. 9. In addition, as shown in FIG. 8, two user fields may be implemented with one user block field.

The user fields shown in FIG. 8 and FIG. 9 may be configured based on two formats. That is, a user field related to a MU-MIMO scheme may be configured in a first format, and a user field related to a non-MIMO scheme may be configured in a second format. Referring to the example of FIG. 9, a user field 1 to a user field 3 may be based on the first format, and a user field 4 to a user field 8 may be based on the second format. The first format or the second format may include bit information of the same length (e.g., 21 bits).

Each user field may have the same size (e.g., 21 bits). For example, the user field of the first format (the first of the MU-MIMO scheme) may be configured as follows.

For example, a first bit (i.e., B0-B10) in the user field (i.e., 21 bits) may include identification information (e.g., STA-ID, partial AID, etc.) of a user STA to which a corresponding user field is allocated. In addition, a second bit (i.e., B11-B14) in the user field (i.e., 21 bits) may include information related to a spatial configuration.

In addition, a third bit (i.e., B15-18) in the user field (i.e., 21 bits) may include modulation and coding scheme (MCS) information. The MCS information may be applied to a data field in a PPDU including corresponding SIG-B.

An MCS, MCS information, an MCS index, an MCS field, or the like used in the present specification may be indicated by an index value. For example, the MCS information may be indicated by an index 0 to an index 11. The MCS information may include information related to a constellation modulation type (e.g., BPSK, QPSK, 16-QAM, 64-QAM, 256-QAM, 1024-QAM, etc.) and information related to a coding rate (e.g., 1/2, 2/3, 3/4, 5/6e, etc.). Information related to a channel coding type (e.g., LCC or LDPC) may be excluded in the MCS information.

In addition, a fourth bit (i.e., B19) in the user field (i.e., 21 bits) may be a reserved field.

In addition, a fifth bit (i.e., B20) in the user field (i.e., 21 bits) may include information related to a coding type (e.g., BCC or LDPC). That is, the fifth bit (i.e., B20) may include information related to a type (e.g., BCC or LDPC) of channel coding applied to the data field in the PPDU including the corresponding SIG-B.

The aforementioned example relates to the user field of the first format (the format of the MU-MIMO scheme). An example of the user field of the second format (the format of the non-MU-MIMO scheme) is as follows.

A first bit (e.g., B0-B10) in the user field of the second format may include identification information of a user STA. In addition, a second bit (e.g., B11-B13) in the user field of the second format may include information related to the number of spatial streams applied to a corresponding RU. In addition, a third bit (e.g., B14) in the user field of the second format may include information related to whether a beamforming steering matrix is applied. A fourth bit (e.g., B15-B18) in the user field of the second format may include modulation and coding scheme (MCS) information. In addition, a fifth bit (e.g., B19) in the user field of the second format may include information related to whether dual carrier modulation (DCM) is applied. In addition, a sixth bit (i.e., B20) in the user field of the second format may include information related to a coding type (e.g., BCC or LDPC).

Hereinafter, a PPDU transmitted/received in a STA of the present specification will be described.

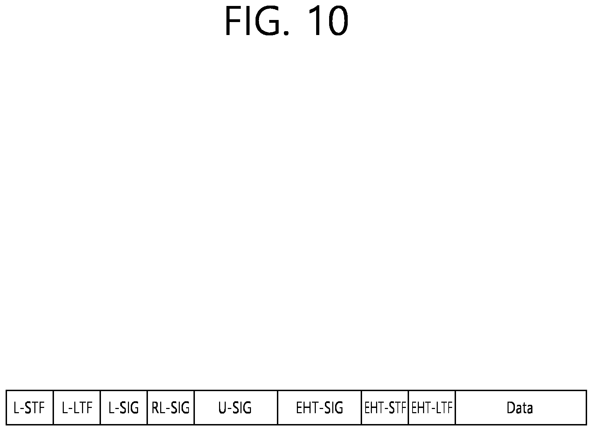

FIG. 10 illustrates an example of a PPDU used in the present specification.

The PPDU of FIG. 10 may be called in various terms such as an EHT PPDU, a TX PPDU, an RX PPDU, a first type or N-th type PPDU, or the like. For example, in the present specification, the PPDU or the EHT PPDU may be called in various terms such as a TX PPDU, a RX PPDU, a first type or N-th type PPDU, or the like. In addition, the EHT PPDU may be used in an EHT system and/or a new WLAN system enhanced from the EHT system.

The PPDU of FIG. 10 may indicate the entirety or part of a PPDU type used in the EHT system. For example, the example of FIG. 10 may be used for both of a single-user (SU) mode and a multi-user (MU) mode. In other words, the PPDU of FIG. 10 may be a PPDU for one receiving STA or a plurality of receiving STAs. When the PPDU of FIG. 10 is used for a trigger-based (TB) mode, the EHT-SIG of FIG. 10 may be omitted. In other words, an STA which has received a trigger frame for uplink-MU (UL-MU) may transmit the PPDU in which the EHT-SIG is omitted in the example of FIG. 10.

In FIG. 10, an L-STF to an EHT-LTF may be called a preamble or a physical preamble, and may be generated/transmitted/received/obtained/decoded in a physical layer.

A subcarrier spacing of the L-STF, L-LTF, L-SIG, RL-SIG, U-SIG, and EHT-SIG fields of FIG. 10 may be determined as 312.5 kHz, and a subcarrier spacing of the EHT-STF, EHT-LTF, and Data fields may be determined as 78.125 kHz. That is, a tone index (or subcarrier index) of the L-STF, L-LTF, L-SIG, RL-SIG, U-SIG, and EHT-SIG fields may be expressed in unit of 312.5 kHz, and a tone index (or subcarrier index) of the EHT-STF, EHT-LTF, and Data fields may be expressed in unit of 78.125 kHz.

In the PPDU of FIG. 10, the L-LTE and the L-STF may be the same as those in the conventional fields.

The L-SIG field of FIG. 10 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-HT, HT, VHT PPDU or an EHT PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI or the EHT PPDU, the value of the length field may be determined as a multiple of 3, and for the HE PPDU, the value of the length field may be determined as "a multiple of 3"+1 or "a multiple of 3"+2.

For example, the transmitting STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, - 7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation on a frequency domain corresponding to {-28, -27, +27, +28}.

The transmitting STA may generate an RL-SIG generated in the same manner as the L-SIG. BPSK modulation may be applied to the RL-SIG. The receiving STA may know that the RX PPDU is the HE PPDU or the EHT PPDU, based on the presence of the RL-SIG.

A universal SIG (U-SIG) may be inserted after the RL-SIG of FIG. 10. The U-SIB may be called in various terms such as a first SIG field, a first SIG, a first type SIG, a control signal, a control signal field, a first (type) control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4 $\mu$s. Each symbol of the U-SIG may be used to transmit the 26-bit information. For example, each symbol of the U-SIG may be transmitted/received based on 52 data tomes and 4 pilot tones.

Through the U-SIG (or U-SIG field), for example, A-bit information (e.g., 52 un-coded bits) may be transmitted. A first symbol of the U-SIG may transmit first X-bit information (e.g., 26 un-coded bits) of the A-bit information, and a second symbol of the U-SIB may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, "000000".

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits may indicate that the TX/RX PPDU is an EHT PPDU. In other words, when the transmitting STA transmits the EHT PPDU, the PHY version identifier of 3 bits may be set to a first value. In other words, the receiving STA may determine that the RX PPDU is the EHT PPDU, based on the PHY version identifier having the first value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a TXOP length and information related to a BSS color ID.

For example, when the EHT PPDU is divided into various types (e.g., various types such as an EHT PPDU related to an SU mode, an EHT PPDU related to a MU mode, an EHT PPDU related to a TB mode, an EHT PPDU related to extended range transmission, or the like), information related to the type of the EHT PPDU may be included in the version-dependent bits of the U-SIG.

For example, the U-SIG may include: 1) a bandwidth field including information related to a bandwidth; 2) a field including information related to an MCS scheme applied to EHT-SIG; 3) an indication field including information regarding whether a dual subcarrier modulation (DCM) scheme is applied to EHT-SIG; 4) a field including information related to the number of symbol used for EHT-SIG; 5) a field including information regarding whether the EHT-SIG is generated across a full band; 6) a field including information related to a type of EHT-LTF/STF; and 7) information related to a field indicating an EHT-LTF length and a CP length.

Preamble puncturing may be applied to the PPDU of FIG. 10. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or EHT-SIG. For example, a first field of the U-SIG may include information related to a contiguous bandwidth, and second field of the U-SIG may include information related to the preamble puncturing applied to the PPDU.

For example, the U-SIG and the EHT-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an EHT-SIG contiguous to the first U-SIG may include information related to a preamble puncturing applied to the second 80 MHz band (i.e., information related to a preamble puncturing pattern), and an EHT-SIG contiguous to the second U-SIG may include information related to a preamble puncturing (i.e., information related to a preamble puncturing pattern) applied to the first 80 MHz band.

Additionally or alternatively, the U-SIG and the EHT-SIG may include the information related to the preamble puncturing, based on the following method. The U-SIG may include information related to a preamble puncturing (i.e., information related to a preamble puncturing pattern) for all bands. That is, the EHT-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The EHT-SIG of FIG. 10 may include control information for the receiving STA. The EHT-SIG may be transmitted through at least one symbol, and one symbol may have a length of 4 μs. Information related to the number of symbols used for the EHT-SIG may be included in the U-SIG.

The EHT-SIG may include a technical feature of the HE-SIG-B described with reference to FIG. 8 and FIG. 9. For example, the EHT-SIG may include a common field and a user-specific field as in the example of FIG. 8. The common field of the EHT-SIG may be omitted, and the number of user-specific fields may be determined based on the number of users.

As in the example of FIG. 8, the common field of the EHT-SIG and the user-specific field of the EHT-SIG may be individually coded. One user block field included in the user-specific field may include information for two users, but a last user block field included in the user-specific field may include information for one user. That is, one user block field of the EHT-SIG may include up to two user fields. As in the example of FIG. 9, each user field may be related to MU-MIMO allocation, or may be related to non-MU-MIMO allocation.

As in the example of FIG. 8, the common field of the EHT-SIG may include a CRC bit and a tail bit. A length of the CRC bit may be determined as 4 bits. A length of the tail bit may be determined as 6 bits, and may be set to '000000'.

As in the example of FIG. 8, the common field of the EHT-SIG may include RU allocation information. The RU allocation information may imply information related to a location of an RU to which a plurality of users (i.e., a plurality of receiving STAs) are allocated. The RU allocation information may be configured in unit of 8 bits (or N bits), as in Table 1.

A mode in which the common field of the EHT-SIG is omitted may be supported. The mode in the common field of the EHT-SIG is omitted may be called a compressed mode. When the compressed mode is used, a plurality of users (i.e., a plurality of receiving STAs) may decode the PPDU (e.g., the data field of the PPDU), based on non-OFDMA. That is, the plurality of users of the EHT PPDU may decode the PPDU (e.g., the data field of the PPDU) received through the same frequency band. Meanwhile, when a non-compressed mode is used, the plurality of users of the EHT PPDU may decode the PPDU (e.g., the data field of the PPDU), based on OFDMA. That is, the plurality of users of the EHT PPDU may receive the PPDU (e.g., the data field of the PPDU) through different frequency bands.

The EHT-SIG may be configured based on various MCS schemes. As described above, information related to an MCS scheme applied to the EHT-SIG may be included in U-SIG. The EHT-SIG may be configured based on a DCM scheme. For example, among N data tones (e.g., 52 data tones) allocated for the EHT-SIG, a first modulation scheme may be applied to half of consecutive tones, and a second modulation scheme may be applied to the remaining half of the consecutive tones. That is, a transmitting STA may use the first modulation scheme to modulate specific control information through a first symbol and allocate it to half of the consecutive tones, and may use the second modulation scheme to modulate the same control information by using a second symbol and allocate it to the remaining half of the consecutive tones. As described above, information (e.g., a 1-bit field) regarding whether the DCM scheme is applied to the EHT-SIG may be included in the U-SIG. The EHT-STF of FIG. 10 may be used for improving automatic gain control estimation in a multiple input multiple output (MIMO) environment or an OFDMA environment. The EHT-LTF of FIG. 10 may be used for estimating a channel in the MIMO environment or the OFDMA environment.

Information related to a type of STF and/or LTF (information related to a GI applied to LTF is also included) may be included in a SIG-A field and/or SIG-B field or the like of FIG. 10.

A PPDU (e.g., EHT-PPDU) of FIG. 10 may be configured based on the example of FIG. 5 and FIG. 6.

For example, an EHT PPDU transmitted on a 20 MHz band, i.e., a 20 MHz EHT PPDU, may be configured based on the RU of FIG. 5. That is, a location of an RU of EHT-STF, EHT-LTF, and data fields included in the EHT PPDU may be determined as shown in FIG. 5.

An EHT PPDU transmitted on a 40 MHz band, i.e., a 40 MHz EHT PPDU, may be configured based on the RU of FIG. 6. That is, a location of an RU of EHT-STF, EHT-LTF, and data fields included in the EHT PPDU may be determined as shown in FIG. 6.

Since the RU location of FIG. 6 corresponds to 40 MHz, a tone-plan for 80 MHz may be determined when the pattern of FIG. 6 is repeated twice. That is, an 80 MHz EHT PPDU may be transmitted based on a new tone-plan in which not the RU of FIG. 7 but the RU of FIG. 6 is repeated twice.

When the pattern of FIG. 6 is repeated twice, 23 tones (i.e., 11 guard tones + 12 guard tones) may be configured in a DC region. That is, a tone-plan for an 80 MHz EHT PPDU allocated based on OFDMA may have 23 DC tones. Unlike this, an 80 MHz EHT PPDU allocated based on non-OFDMA (i.e., a non-OFDMA full bandwidth 80 MHz PPDU) may be configured based on a 996-RU, and may include 5 DC tones, 12 left guard tones, and 11 right guard tones.

A tone-plan for 160/240/320 MHz may be configured in such a manner that the pattern of FIG. 6 is repeated several times.

The PPDU of FIG. 10 may be determined (or identified) as an EHT PPDU based on the following method.

A receiving STA may determine a type of an RX PPDU as the EHT PPDU, based on the following aspect. For example, the RX PPDU may be determined as the EHT PPDU: 1) when a first symbol after an L-LTF signal of the RX PPDU is a BPSK symbol; 2) when RL-SIG in which the L-SIG of the RX PPDU is repeated is detected; and 3) when a result of applying "modulo 3" to a value of a length field of the L-SIG of the RX PPDU is detected as "0". When the RX PPDU is determined as the EHT PPDU, the receiving STA may detect a type of the EHT PPDU (e.g., an SU/MU/Trigger-based/Extended Range type), based on bit information included in a symbol after the RL-SIG of FIG. 10. In other words, the receiving STA may determine the RX PPDU as the EHT PPDU, based on: 1) a first symbol after an L-LTF signal, which is a BPSK symbol; 2) RL-SIG contiguous to the L-SIG field and identical to L-SIG; 3) L-SIG including a length field in which a result of applying "modulo 3" is set to "0"; and 4) a 3-bit PHY version identifier of the aforementioned U-SIG (e.g., a PHY version identifier having a first value).

For example, the receiving STA may determine the type of the RX PPDU as the EHT PPDU, based on the following aspect. For example, the RX PPDU may be determined as the HE PPDU: 1) when a first symbol after an L-LTF signal is a BPSK symbol; 2) when RL-SIG in which the L-SIG is repeated is detected; and 3) when a result of applying "modulo 3" to a value of a length field of the L-SIG is detected as "1" or "2".

For example, the receiving STA may determine the type of the RX PPDU as a non-HT, HT, and VHT PPDU, based on the following aspect. For example, the RX PPDU may be determined as the non-HT, HT, and VHT PPDU: 1) when a first symbol after an L-LTF signal is a BPSK symbol; and 2) when RL-SIG in which L-SIG is repeated is not detected. In addition, even if the receiving STA detects that the RL-SIG is repeated, when a result of applying "modulo 3" to the length value of the L-SIG is detected as "0", the RX PPDU may be determined as the non-HT, HT, and VHT PPDU.

In the following example, a signal represented as a (TX/RX/UL/DL) signal, a (TX/RX/UL/DL) frame, a (TX/RX/UL/DL) packet, a (TX/RX/UL/DL) data unit, (TX/RX/UL/DL) data, or the like may be a signal transmitted/received based on the PPDU of FIG. 10. The PPDU of FIG. 10 may be used to transmit/receive frames of various types. For example, the PPDU of FIG. 10 may be used for a control frame. An example of the control frame may include a request to send (RTS), a clear to send (CTS), a power save-poll (PS-poll), BlockACKReq, BlockAck, a null data packet (NDP) announcement, and a trigger frame. For example, the PPDU of FIG. 10 may be used for a management frame. An example of the management frame may include a beacon frame, a (re-)association request frame, a (re-)association response frame, a probe request frame, and a probe response frame. For example, the PPDU of FIG. 10 may be used for a data frame. For example, the PPDU of FIG. 10 may be used to simultaneously transmit at least two or more of the control frames, the management frame, and the data frame.

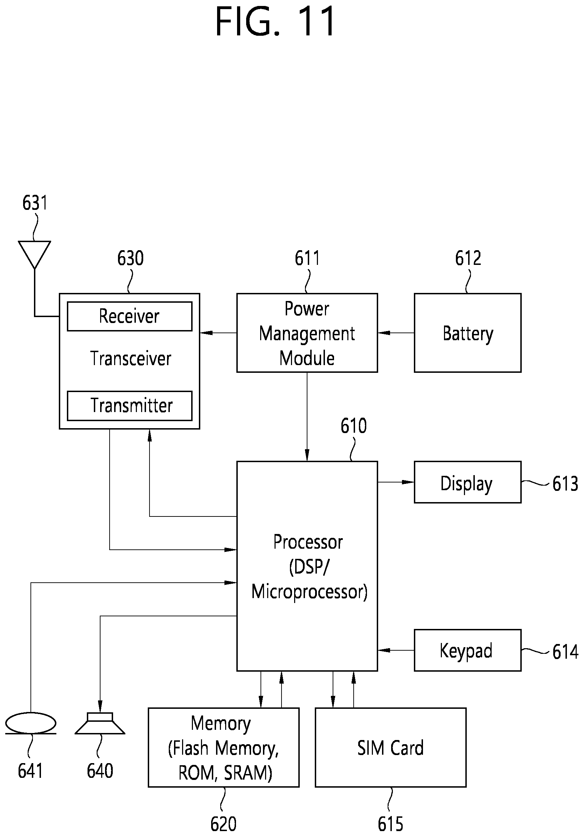

FIG. 11 illustrates an example of a modified transmission device and/or receiving device of the present specification.

Each device/STA of the sub-figure (a)/(b) of FIG. 1 may be modified as shown in FIG. 11. A transceiver 630 of FIG. 11 may be identical to the transceivers 113 and 123 of FIG. 1. The transceiver 630 of FIG. 11 may include a receiver and a transmitter.

A processor 610 of FIG. 11 may be identical to the processors 111 and 121 of FIG. 1. Alternatively, the processor 610 of FIG. 11 may be identical to the processing chips 114 and 124 of FIG. 1.

A memory 620 of FIG. 11 may be identical to the memories 112 and 122 of FIG. 1. Alternatively, the memory 620 of FIG. 11 may be a separate external memory different from the memories 112 and 122 of FIG. 1.

Referring to FIG. 11, a power management module 611 manages power for the processor 610 and/or the transceiver 630. A battery 612 supplies power to the power management module 611. A display 613 outputs a result processed by the processor 610. A keypad 614 receives inputs to be used by the processor 610. The keypad 614 may be displayed on the display 613. A SIM card 615 may be an integrated circuit which is used to securely store an international mobile subscriber identity (IMSI) and its related key, which are used to identify and authenticate subscribers on mobile telephony devices such as mobile phones and computers.

Referring to FIG. 11, a speaker 640 may output a result related to a sound processed by the processor 610. A microphone 641 may receive an input related to a sound to be used by the processor 610.

### 1. EHT sounding protocol

Transmit beamforming and DL MU-MIMO (DownLink Multi User-Multi Input Multi Output) require knowledge of channel conditions to calculate a steering matrix applied to the transmit signal to optimize reception at one or more receivers. The EHT STA determines channel state information using the EHT sounding protocol. The EHT sounding protocol provides explicit feedback mechanisms defined as EHT non-trigger-based (non-TB) sounding and EHT trigger-based (TB) sounding. Here, the EHT beamformee measures the channel using the training signal transmitted by the EHT beamformer (i.e., the EHT sounding NDP) and sends back a transformed estimate of the channel state. The EHT beamformer uses this estimate to derive a steering matrix.

The EHT beamformer returns an estimate of a channel state in an EHT compressed beamforming/CQI report included in one or more EHT Compressed Beamforming/CQI frames. There are three types of EHT compression beamforming/CQI report.

- SU feedback: EHT compression beamforming / CQI report consists of an EHT compression beamforming report field.
- MU feedback: EHT compression beamforming / CQI report consists of an EHT compression beamforming report field and an EHT MU Exclusive beamforming report field.
- CQI feedback: EHT compression beamforming / CQI report consists of an EHT CQI report field.

For reference, the use of EHT TB sounding does not necessarily mean MU feedback. EHT TB sounding is also used to obtain SU feedback and CQI feedback.

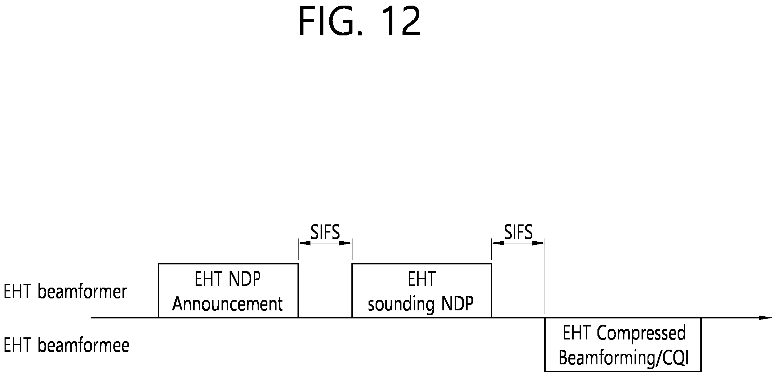

FIG. 12 shows an example of EHT non-TB sounding.

The EHT non-TB sounding sequence is initiated by the EHT beamformer using an individually addressed EHT NDP Announcement frame containing exactly one STA information field, and EHT sounding NDP is performed after SIFS. The EHT beamformer responds with an EHT Compressed Beamforming/CQI frame after SIFS.

The AID11 subfield of the STA information field must be set to the AID of the STA identified by the RA field of the EHT NDP Announcement frame, or set to 0 if the STA identified by the RA field is a mesh STA, AP, or IBSS STA.

An example of an EHT non-TB sounding sequence with a single EHT beamform is shown in FIG. 12.

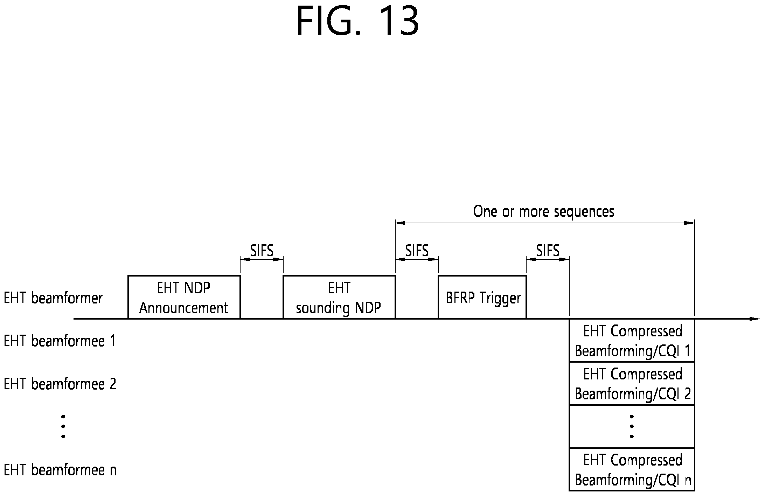

FIG. 13 shows an example of EHT TB sounding.

The EHT TB sounding sequence is initiated by the EHT beamformer using a broadcast EHT NDP Announcement frame with two or more STA information fields, an EHT sounding NDP is transmitted after the SIFS, and a BFRP (Beamforming Report) trigger frame following the SIFS is transmitted. The BFRP trigger frame transmitted within the EHT TB sounding sequence must request the EHT TB PPDU.

An example of an EHT TB sounding sequence with two or more EHT beamformes is shown in FIG. 13.

An EHT beamformer initiating an EHT TB sounding sequence must transmit an EHT NDP Announcement frame including two or more STA information fields and an RA field set to a broadcast address.

The EHT beamformer may initiate an EHT TB sounding sequence to request SU, MU or CQI feedback.

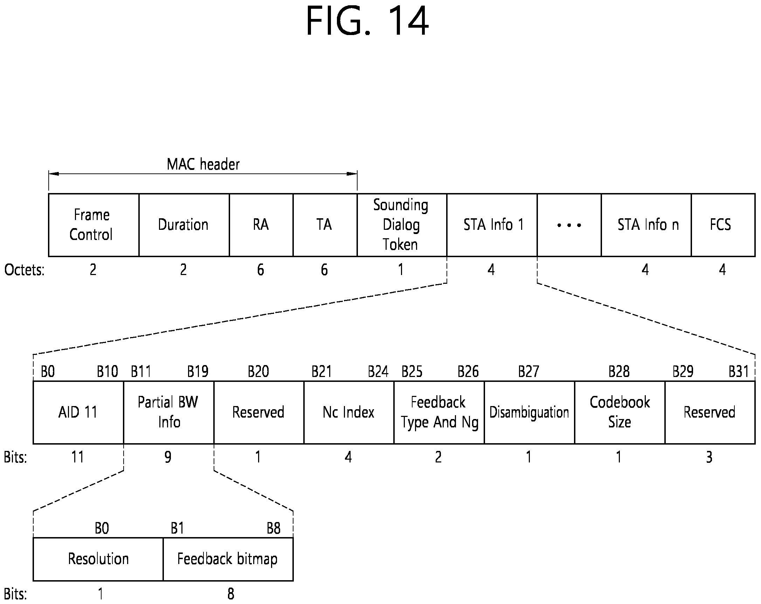

FIG. 14 shows an example of an EHT NDP Announcement frame format.

The EHT NDP Announcement frame of FIG. 14 includes a Sounding Dialog Token field, and the Sounding Dialog Token field includes an NDP Announcement Variant field and a Sounding Dialog Token Number field.

The value of the NDP Announcement Variant field identifies a variant of the NDP Announcement frame. If the value of the NDP Announcement Variant field is 0/1/2/3, the NDP Announcement frame is set to VHT/Ranging/HE/EHT NDP Announcement frame.

The VHT/HE/EHT NDP Announcement frame includes at least one STA Info field. If the VHT/HE/EHT NDP Announcement frame includes only one STA Info field, the RA field is set to the address of an STA capable of providing feedback. If the VHT/HE/EHT NDP Announcement frame includes one or more STA Info fields, the RA field is set to a broadcast address.

The TA field is set to the address of the STA transmitting the VHT/HE/EHT NDP Announcement frame or the bandwidth signaling TA of the STA transmitting the VHT/HE/EHT NDP Announcement frame.

The Resolution subfield of the Partial BW Info subfield indicates the resolution bandwidth for each bit of the Feedback Bitmap subfield. The Feedback Bitmap subfield represents the request for each resolution bandwidth from the lowest frequency to the highest frequency, and B1 represents the lowest resolution bandwidth. Each bit in the Feedback Bitmap subfield is set to 1 when feedback is requested in the corresponding resolution bandwidth.

The Partial BW Info subfield is defined in the format at the bottom of FIG. 14. The Resolution bit indicates the feedback resolution bandwidth. The Resolution bit is set to 0 to indicate a resolution of 20 MHz when the BW subfield is set to 0 to 3, and is set to 1 to indicate a resolution of 40 MHz when the BW subfield is set to 4. The Feedback Bitmap subfield indicates each resolution bandwidth for which the beamformer requests feedback. Each bit in the Feedback Bitmap subfield is set to 1 if feedback is requested for the corresponding bandwidth, and 0 otherwise.

If the bandwidth of the EHT NDP Announcement frame is less than 320 MHz, set the Resolution bit B0 to 0 to indicate a resolution of 20 MHz.

- When the bandwidth of the EHT NDP Announcement frame is 20 MHz, B1 is set to 1 to indicate a feedback request for a 242-tone RU. B2-B8 are reserved and set to 0.
- When the bandwidth of the EHT NDP Announcement frame is 40MHz, B1 and B2 indicate feedback requests for each of the two 242-tone RUs from low to high frequencies. B3-B8 are reserved and set to 0.
- When the bandwidth of the EHT NDP Announcement frame is 80 MHz, B1 to B4 represent feedback requests for each of the four 242-tone RUs from low to high frequencies. B5 to B8 are reserved and set to 0. If B1 to B4 are all set to 1, it indicates a feedback request for a 996-tone RU.
- When the bandwidth of the EHT NDP Announcement frame is 160 MHz, B1-B8 represent feedback requests for each of the eight 242-tone RUs from low to high frequencies. If B1 to B4 are all set to 1, it indicates a feedback request for the lower 996 tone RU, and if B5 to B8 are all set to 1, it indicates a feedback request to the upper 996 tone RU.

When the bandwidth of the EHT NDP Announcement frame is 320 MHz, the resolution bit B0 is set to 1 to indicate a resolution of 40 MHz. B1 to B8 represent feedback requests for each of the eight 484-tone RUs from low to high frequencies. When both B1 and B2 are set to 1, it indicates a feedback request for the lowest 996-tone RU, when both B3 and B4 are set to 1, it indicates a feedback request for the second lowest 996-tone RU, when both B5 and B6 are set to 1, it indicates a feedback request for the second highest 996-tone RU, and when both B7 and B8 are set to 1, it indicates a feedback request for the highest 996-tone RU.

Partial BW Info subfields are defined in the table below.

[Table 3]

| Operating channel width of the EHT beamformee (MHz) | Bandwidth of the EHT NDP Announcement frame (MHz) | Feedback RU/NMU size | Partial BW Info subfield values |
|---|---|---|---|
| 20, 40, 50, 160, 320 | 20 | 242 | 010000000 |
| 20, 40, 80, 160, 320 | 40 | 242 | 010000000, 001000000 |
| | | 484 | 011000000 |

(continued)

| Operating channel width of the EHT beamformee (MHz) | Bandwidth of the EHT NDP Announcement frame (MHz) | Feedback RU/NMU size | Partial BW Info subfield values |
|---|---|---|---|
| 20, 80, 160, 320 | 80 | 242 | 010000000,001000000,000100000,000010000 |
| | | 484 | 011000000, 000110000 |
| | | 484+242 | 011100000, 011010000, 010110000, 001110000 |
| | | 996 | 011110000 |
| 20, 80, 160, 320 | 160 | 242 | 010000000,001000000,000100000,000010000, 000001000,000000100, 000000010, 000000001 |
| | | 484 | 011000000, 000110000, 000001100, 000000011 |
| | | 484+242 | 011100000, 011010000, 010110000, 001110000, 000001110, 000001101, 000001011, 000000111 |
| | | 996 | 011110000,000001111 |
| | | 996+484 | 011111100,011110011,011001111,000111111 |
| | | 996+484+242 | 011101111, 011011111, 010111111, 001111111, 011111110, 011111101, 011111011, 011110111 |
| | | 2×996 | 011111111 |
| 80, 160, 320 | 320 | 484 | 110000000, 101000000, 100100000, 100010000, 100001000, 100000100,100000010, 100000001 |
| | | 996 | 111000000,100110000,100001100,100000011 |
| | | 996+484 | 111100000, 111010000, 110110000, 101110000, 100001110,100001101,100001011,100000111 |
| | | 2×996 | 111110000, 100001111 |
| | | 2×996+484 | 111111000, 111110100, 111101100, 111011100, 110111100,101111100,100111110,100111101, 100111011, 100110111, 100101111, 100011111 |
| | | 3×996 | 111111100,111110011,111001111,100111111 |
| | | 3×996+484 | 111111110, 111111101, 111111011, 111110111, 111101111, 111011111, 110111111, 101111111 |
| | | 4×996 | 111111111 |

## 2. Definition of extended bandwidth

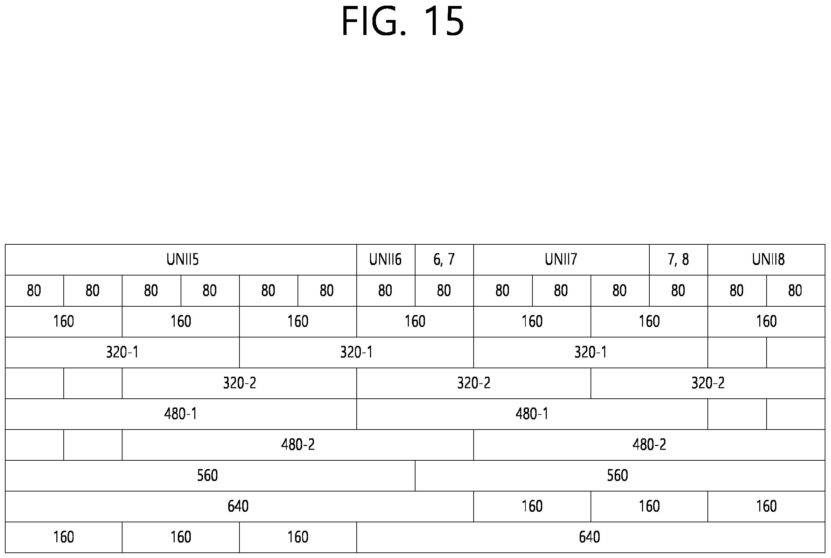

FIG. 15 shows channelization and extended channelization of the 6 GHz band of the 802.11be wireless LAN system.

Referring to FIG. 15, a 320MHz channel is generated by combining two 160MHz channels, and two types of 320MHz channels (320-1MHz channel and 320-2MHz channel) overlap each other. In other words, a 320 MHz channel was defined to maximize utilization within the total spectrum of the 6 GHz band by partially overlapping 320 channels.

EHT (802.11be) supports not only the 160MHz BW (BandWidth) that was supported up to 802.11ax, but also a wider BW (BandWidth) of 320MHz. In the existing 20/40/80/160MHz channelization, overlapping channels did not exist. However, 320MHz BW includes overlapping channels such as 320-1MHz and 320-2MHz in FIG. 15. Overlapping channels may or may not exist between the 320-1MHz channel and the 320-2MHz channel. for example, in FIG. 15, the first 320-1MHz channel and the first 320-2MHz channel have overlapping channels of 160MHz BW, but the first 320-1MHz channel and the second 320-2MHz channel do not have overlapping channels. Meanwhile, currently, the 320-1MHz channel and the 320-2MHz channel are signaled separately in the BW subfield of the Universal Signal (U-SIG) field of the EHT PPDU. The 320-1MHz channel and 320-2MHz channel are channels supported by different BSS (Basic Service Set). For example, the first BSS may support a 320-1MHz channel, and the second BSS may support a 320-2MHz channel.

The reason for distinguishing between 320-1MHz and 320-2MHz is because if the STA's primary 20MHz channel is in an area where 320-1MHz and 320-2MHz overlap, it must be distinguished whether it is allocated to 320-1MHz or 320-2MHz.

In this specification, the 160MHz channel including the primary channel (i.e., 20MHz primary channel) is referred to as P160, and the 160MHz channel without it is referred to as S160.

## 3. Applicable embodiments to this specification

In the next generation wireless LAN system (Next wi-fi or beyond 802.11be), transmission and reception of signals using 480MHz or 640MHz BW, which is larger than 320MHz, can be considered. Therefore, sounding is performed to perform beamforming or MIMO (Multi Input Multi Output) transmission using 480MHz or 640MHz BW in Next wi-fi. This specification proposes a method of indicating partial BW or requested feedback bandwidth in NDPA (Null Data Packet Announcement) to request feedback for a partial band after performing sounding using 480MHz, 560MHz, or 640MHz in Next wi-fi.

In 802.11, sounding is performed to measure channel information for beamforming or MIMO transmission, and the AP indicates the STA on information about the bandwidth to be measured or the requested feedback bandwidth through NDPA. Since the information is configured considering 320MHz, there is a problem in that it cannot instruct information about a BW higher than 320MHz. Therefore, in this specification, a method for configuring the information to transmit information about the bandwidth to be measured or the requested feedback bandwidth through NDPA when sounding is performed using the extended BW (e.g., 480MHz, 560MHz or 640MHz) proposed in next wi-fi is proposed. In this specification, as an example, the information is defined as partial bandwidth info.

Next Wi-Fi, newly defined after 802.11be, can transmit and receive signals using extended BW such as 480MHz, 560MHz, and 640MHz. Therefore, when sounding is performed using extended BW for beamforming transmission and MIMO transmission using extended BW as described above, this embodiment proposes a method for configuring information for indicating information about feedback BW for this.

The requested feedback BW or requested feedback RU information for extended BW (e.g., 480 MHz, 560 MHz, 640 MHz) is configured as follows. In this specification, for convenience, the requested feedback BW or requested feedback RU information is referred to as partial BW info, and the name of this information may be changed.

1. A method of indicating up to 320MHz BW in the same way as the existing EHT method and applying a different subchannel resolution (i.e., 80MHz) for the extended BW. (Example 1)

1-A. For 20/80/160/320MHz BW, the AP indicates feedback BW information to be measured using the partial BW info field (i.e., 9-bit information) in the same way as defined in the existing 802.11be.

1-A-i. Partial BW info field is configured identically to EHT (802.11be) (identical to Partial BW Info field of Fig. 14)

1-B. For extended BW greater than 320MHz, the subchannel resolution is applied to 80MHz, and the AP indicates the BW that should be fed back, and the information can be configured as follows.

1-B-i. The AP can indicate by reusing the reserved bit of the EHT-STA info field.

1) As shown in Fig. 14, the STA info field of EHT NDPA sets B20, B29-B31 as reserved bits. Therefore, the reserved bits (B20, B29~B31) are used to indicate 80MHz resolution.

2) The 80MHz resolution using the reserved bits can be defined as follows.

2)-A. Method of indicating with only one bit.

2)-A-i. 80MHz resolution is indicated using only one bit.

2)-A-ii. For example, B20 can be used as the 80MHz resolution bit, and at this time, the bit is set to 1 when the BW is 480/560/640MHz to indicate 80MHz resolution, and the bit is set to 0 for BWs below 320MHz. At this time, the existing resolution bit (B0) is not considered.

2)-A-iii. In addition, when the BW is 480/560/640MHz, the resolution bit B0 of the partial BW info is set to 0 or reserved.

2)-A-iv. When the BW is 480/560/640MHz, the STA can know that the resolution for the feedback BW is 80MHz through the B20 value of the STA info field of the NDPA as described above.

2)-A-v. Since the reserved bit of the existing STA info field is used to additionally indicate 80MHz resolution, it has the advantage of not increasing signaling overhead.

2)-B. A method of indicating 80MHz resolution using the existing resolution bit (B0) and reserved 1 bit (B20). In other words, a method of indicating using a 2-bit combination.

2)-B-i. For example, 80MHz resolution can be indicated when B0 = 1 and B20 = 1.
2)-B-i-1. The above is only an example, and other bit combinations can be used to indicate 80MHz resolution.
2)-B-ii. The Feedback Bitmap or subchannel bitmap (8 bits) of the Partial BW info field is set to 80MHz resolution as above, and indicates whether puncturing/feedback is present for each 80MHz subchannel.

2)-B-ii-1. In the case of 480MHz, depending on the channelization for 480MHz, the MSB (Most Significant Bit) 2 bits or the LSB (Least Significant Bit) 2 bits of the 8-bit table are always set to a value indicating punctured. That is, the corresponding 2 bits can always be set to 0 or reserved.
2)-B-ii-2. In the case of 560MHz, depending on the channelization for 560MHz, the MSB 1 bit or the LSB 1 bit of the 8-bit table are always set to a value indicating punctured. That is, the corresponding 1 bit can always be set to 0 or reserved.

2)-B-iii. In the case of BW being 480/560/640MHz, the STA can know that the resolution for the feedback BW is 80MHz through the B0 and B20 values of the STA info field of the NDPA as described above.
2)-B-iv. Since the reserved bit of the existing STA info field is used to additionally indicate 80MHz resolution, there is an advantage of not increasing signaling overhead.

B-ii. Since 480/640MHz BW is used in next wi-fi (beyond 11be), the STA info field for next NDPA can be newly defined without reusing the EHT NDPA STA info field.
B-ii-1. The newly defined STA info field can be newly configured as the partial BW info field, including 80MHz resolution for 480/560/640MHz BW.
B-ii-A. The partial BW info field consists of a total of 10 bits, where the MSB or LSB 2 bits (e.g., B0, B1) are used to indicate the resolution, and the remaining 8 bits (B2~B10) are used to indicate the presence or absence of feedback/puncturing of the subchannel. At this time, each one bit represents a subchannel according to resolution and represents information of 20/40/80MHz respectively.

B-ii-B. Configuration of partial BW

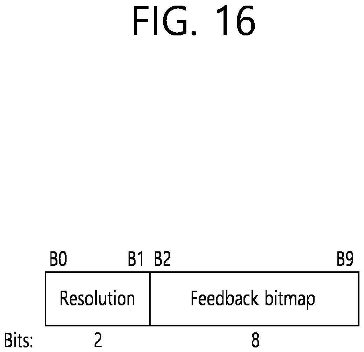

FIG. 16 shows an example of a Partial BW info field included in a STA info field of a newly defined NDPA frame in a next-generation wireless LAN system.
B-ii-B-i. As in Fig. 16, 2 bits (B0, B1) are used to indicate feedback resolution (i.e., 20/40/80MHz) and are configured as follows.

[Table 4]

| Value (B0B1) | Resolution |
| --- | --- |
| 0(00) | 20MHz |
| 1(10) | 40MHz |
| 2(01) | 80MHz |
| 3(11) | Reserved |

B-ii-B-i-1. In the above, 80MHz resolution is used only when BW is 480/560/640MHz.
B-ii-B-ii. In the case of 480MH, depending on channelization, the first 2 bits or the last 2 bits of the feedback bitmap are always set to punctured case or reserved.
B-ii-B-ii-1. For example, set to 00xxxxxx or xxxxxx00
B-ii-B-iii. In the case of 560MH, depending on channelization, the first 1 bit or the last 1 bit of the feedback bitmap are always set to punctured case or reserved.
B-ii-B-iii-1. For example, set to 0xxxxxxx or xxxxxxx0
B-ii-B-iv. STA can know whether it is wide bandwidth through resolution bits, and can also implicitly identify information about 480/560/640MHz BW through the setting of specific MSB or LSB of the bitmap.

B-ii-2. Unlike the above, the STA info field can be configured by rephrasing the EHT STA info field by changing only the partial BW info field in the EHT STA info field, thereby minimizing the impact of changing the STA info field.

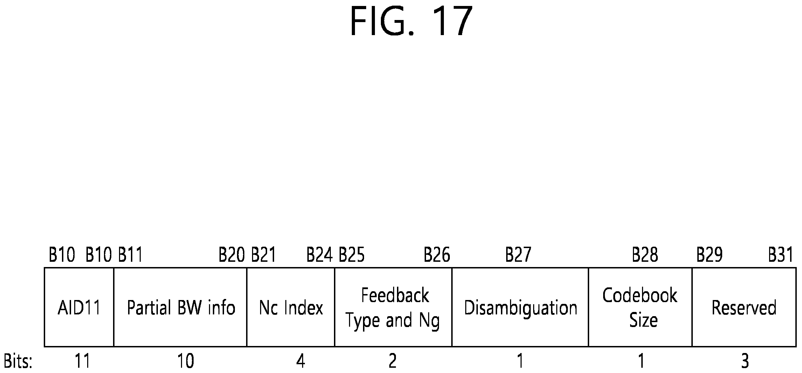

B-ii-2-A. By rephrasing the EHT STA info field as above, the STA info field including the proposed partial BW info field can be configured as shown in Fig. 17.

FIG. 17 shows an example of a STA info field including the partial BW info field of FIG. 16.

B-ii-2-B. The Partial BW Info field (10 bits) of Fig. 17 can be composed of 2-bit resolution and 8-bit bitmap as suggested above.

2. Method for indicating preamble puncturing by specific frequency unit (or segment or block) constituting BW

A. BW larger than 320MHz (480, 560, 640MHz) can be composed of two frequency blocks or frequency segments as follows, and can be composed per BW as follows.

i.

$$480\text{MHz} = 320\text{MHz} + 160\text{MHz or } 160\text{MHz} + 320\text{MHz}$$

ii.

$$560\text{MHz} = 320\text{MHz} + 240\text{MHz or } 240\text{MHz} + 320\text{MHz}$$

iii.

$$640\text{MHz} = 320\text{MHz} + 320\text{MHz}$$

2-B. In the wide bandwidth configured as above, since puncturing considers only the One hole puncturing case, only puncturing for one frequency block (i.e., 160 MHz/240 MHz/320 MHz) can be considered. Therefore, for the extended BW, puncturing is applied only to one frequency block (e.g., 160 MHz, 240 MHz, 320 MHz) that constitutes the BW. At this time, the puncturing instruction for each frequency block can be performed as follows.

2-B-i. In the extended BW, the frequency block (i.e., FB) according to the BW can be configured as follows.

2-B-i-1. In the case of 480 MHz, it can be configured as 320 (FB1) + 160 (FB2) or 160 (FB1) + 320 (FB2), and the information on the FB configuration can be identified through the BW information and the channelization information.

2-B-i-2. In the case of 560MHz, it can be configured as 320(FB1)+240(FB2) or 240(FB1)+320(FB2), and information about the FB configuration can be identified through BW information and channelization information.

2-B-i-3. In the case of 640MHz, it is configured as 320(FB1)+320(FB2).

2-C. In order to indicate which frequency block (160MHz/240MHz/320MHz) puncturing is applied to when transmitting 480/560/640MHz configured as above, the STA info field is configured to include 1/2/3 bit indicators.

2-C-i. For example, the indicator consists of 1 bit and can be set to 0 to indicate FB1 and set to 1 to indicate FB2.

2-C-i-1. The STA that receives the NDPA receives the Channel bandwidth indicator for the extended bandwidth (480/560/640 MHz) through the service field, and uses the FB indication bit information proposed above when the BW information is 480/560/640 MHz.

2-C-i-1-A. Through the FB indication, the STA can identify the FB to which puncturing is applied in the wide bandwidth, and at this time, the information on the feedback subchannel or partial BW includes only the information on the FB determined through the FB indication.

2-C-i-1-A-i. For example, if 480MHz is composed of 320(FB1)+160(FB2) and puncturing is indicated for FB1, partial BW can be composed of 9 bits by reusing the partial BW field defined in the existing EHT, and the partial BW info field is composed of information for 320MHz. In addition, the STA feeds back information about both FB1 to which puncturing is applied and continuously configured FB2. That is, if puncturing is indicated for FB1, the AP can configure the partial BW field only for FB1, and the STA can think that full band is fed back for FB2. In the case of an STA whose operating BW is FB1 or FB2, only information about the FB indicated through NDPA can be fed back.

2-C-i-1-A-ii. In the case of 560MHz, the FB configured as 240MHz indicates information about the FB through the 9-bit partial BW info field defined in EHT as above, and the resolution bit is set to 1 to indicate 40MHz, and at this time, the MSB 2bit or LSB2bit of the 8-bit table is always set to 00 or punctured.

2-C-ii. In order to indicate an FB to which puncturing is clearly applied regardless of the BW, unlike the above, 2/3bit can be used and is configured as follows.

2-C-ii-1. In the case where the BW is 160MHz or 320MHz, the corresponding BW can be set to FB1 or indicated by assigning a specific BF indication value.

2-C-ii-1-A. When using Specific BF indication for FBs configured at 160/320MHz at 480/560/640MHz

[Table 5]

| Value of FB indication | Contents |
|---|---|
| 0 | 160/320MHz case, set to 0 for BW below 320MHz |
| 1 | Frequency block 1 |
| 2 | Frequency block 2 |
| 3 | Reserved |

In the above table, frequency blocks 1 and 2 represent 160/240/320MHz frequency blocks that constitute 480/560/640MHz.

2-C-ii-1-B. In the case of indicating FB1 and FB2 in 160/320MHz units, respectively

[Table 6]

| Value of FB indication | Contents |
|---|---|
| 0 | Frequency block 1 consist of 160MHz |
| 1 | Frequency block 1 consist of 320MHz |
| 2 | Frequency block 2 consist of 160MHz |
| 3 | Frequency block 2 consist of 320MHz |

In the case where BW is 160MHz or 320MHz, the FB indication value is set to 0 and 1 as shown in the table above. That is, it can be used as a value indicating FB1.

2-C-ii-1-C. Considering the case where FB1 and FB2 are indicated in units of 160/240/320MHz, considering 560MHz differently from the tables 5 and 6 above, the FB indication can be configured as 3 bits as follows.

[Table 7]

| Value of FB indication | Contents |
|---|---|
| 0 | Frequency block 1 consist of 160MHz |
| 1 | Frequency block 1 consist of 240MHz |
| 2 | Frequency block 1 consist of 320MHz |
| 3 | Frequency block 2 consist of 160MHz |
| 4 | Frequency block 2 consist of 240MHz |
| 5 | Frequency block 2 consist of 320MHz |
| 6-7 | Reserved |

2-C-ii-1-D. Unlike the above, 3 bits can be composed of information about FB size (2 bits) and FB location (1 bit) as follows.

2-C-ii-1-D-i. FB indication (3 bits) = FB size (2 bits) + FB location (1 bit)

2-C-ii-1-D-1. FB size (2 bits) can indicate the size of an FB with puncturing or without puncturing.

2-C-ii-1-D-1-A. For example, in the case of indicating an FB with puncturing, it indicates an FB to which a bit table is applied.

2-C-ii-1-D-1-B. For another example, in the case of indicating a No punctured FB, it indicates 160/240/320MHz that is not punctured in a wide bandwidth.

2-C-ii-1-D-2. FB location (1 bit) indicates information about the location where the FB indicated by the FB size exists within the BW and can be set as follows:

2-C-ii-1-D-2-A. FB location (1 bit) is set to 0 to indicate FB1 or lower frequency block

2-C-ii-1-D-2-B. FB location (1 bit) is set to 1 to indicate FB2 or higher frequency block

2-C-ii-1-D-ii. The FB indication can be configured as follows:

2-C-ii-1-D-ii-1. Configuration of FB indication

[Table 8]

| FB size(2bit) B0, B1 | FB location (1bit) B2 | Contents |
| --- | --- | --- |
| 00 | 0 | Used in BW below 320MHz. FB location is always set to 0. |
| 01 | 0 | Frequency block 1 consist of 160MHz |
| 01 | 1 | Frequency block 2 consist of 160MHz |
| 10 | 0 | Frequency block 1 consist of 240MHz |
| 10 | 1 | Frequency block 2 consist of 240MHz |
| 11 | 0 | Frequency block 1 consist of 320MHz |
| 11 | 1 | Frequency block 2 consist of 320MHz |

2-C-ii-1-D-ii-2. In case that only 160MHz and 320MHz are considered as FB size, the table bit setting can be reconfigured excluding 240MHz in Table 8.

2-C-ii-1-D-ii-2-E. The bit setting and value for FB indication suggested above are examples and other values or bit settings can be used.

2-C-ii-1-D-iii. Unlike the above, in case the BW received through NDPA is 320MHz or less, the FB indication bit can be set as a reserved or disregard bit.

2-C-ii-1-D-iv. Since it includes an indicator for frequency block (e.g., 160/240/320MHz) including puncturing as above, the partial BW info can reuse the previously defined 9-bit partial BW info field. Therefore, NDPA for next wi-fi includes the following two fields in NDPA to indicate puncturing information and requested feedback information.

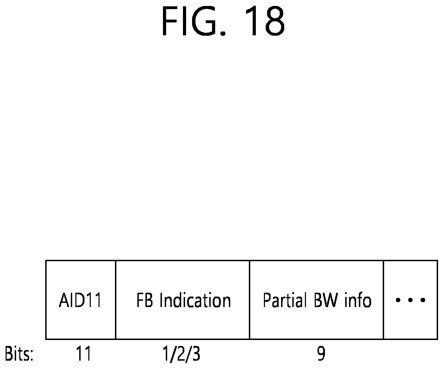

FIG. 18 shows another example of a STA info field of a newly defined NDPA frame in a next-generation wireless LAN system.

2-C-ii-1-D-iv-1. The partial BW Info of Fig. 18 is composed of a resolution 1-bit and an 8-bit bitmap, identical to the partial BW info field defined in 802.11be.

2-C-ii-1-D-v. As described above, FB indicates an FB to which puncturing is applied at 480/560/640MHz, and at this time, partial BW info (i.e., PBI) indicates puncturing pattern information or requested feedback BW for the indicated FB. Therefore, the STA receives only information about PBI with puncturing for the extended BW through NDPA. At this time, since other FBs (160MHz or 320MHz) are no puncturing, they are always included in the feedback, and the STA transmits information about the corresponding FB. When the operating BW of the STA is FB1 or FB2, the STA transmits feedback for the indicated FB1 or FB2 through NDPA.

2-C-ii-1-D-vi. Since the Partial BW info defined in 802.11be is reused as described above, the FB indication information can be indicated using B29 to B31, which are reserved bits of the EHT STA info field of the EHT NDPA frame.

2-C-ii-1-D-vi-1. Since the embodiment indicates the FB using the reserved bit, it can reduce signaling overhead and also has the advantage of being easy to implement since there is no need to define a new STA info field.

2-D. As described above, the FB to which puncturing is applied can be used as static information in one BSS (Basic Service Set). Therefore, the information can be considered as common information and indicated as follows.

2-D-i. The next NDPA frame for the next wi-fi can include the Special STA info field or the common info field in the next NDPA frame to indicate common information. Therefore, the information can be indicated through the Special STA info field or the common info field of the next NDPA frame.

3. A method of configuring partial BW info by equally applying 20/40MHz resolution to 480/560/640MHz.

3-A. For 480/560/640MHz, the partial BW info is configured by applying the same 40MHz resolution as 320MHz. In this case, the partial BW info can be configured as follows.

3-A-i. Partial BW info can be configured with 9 bits as follows.

3-A-i-1. The partial BW info includes 1 bit to indicate the resolution.

3-A-i-A. It can be set to indicate 0 for 20MHz and 1 for 40MHz.

3-A-i-A-i. In the above, the 20MHz resolution is applied up to 160MHz, and the 40MHz resolution is applied to the BW above.

3-A-i-2. Punctured Frequency block size

3-A-i-2-A. The indicator for the FB size to which puncturing is applied can be configured with 1 bit.

3-A-i-2-B. Used to indicate 160MHz and 320MHz, and is set to 0 for 160MHz and 1 for 320MHz.

3-A-i-2-B-i. In the case of 560MHz, it can be indicated as 320MHz FB for 240MHz FB. This can reduce signaling overhead because it uses the existing defined 320MHz without a separate indicator.

3-A-i-2-C. When BW is 160MHz or less, the indicator for FB size is always set to 0.

3-A-i-3. Frequency block indication (FB indication)

3-A-i-3-A. Indicates a frequency block or subchannel or frequency segment to which puncturing is applied in BW.

3-A-i-3-B. The FB indication consists of 1 bit and is used to indicate an FB to which puncturing is applied according to the punctured frequency block size.

3-A-i-3-C. At this time, FB consists of FB1 and FB2, and each FB can be configured as 160MHz or 320MHz, and can be set to 0 for FB1 and 1 for FB2.

3-A-i-4. Channel indication bitmap

3-A-i-4-A. The Channel indication bitmap indicates whether the channel is available or punctured according to the resolution.

3-A-i-4-B. The Channel indication bitmap consists of 8 bits. Each bit indicates puncturing when set to 0, and not punctured when set to 1. Unused bits according to BW are reserved, and at this time, the value is set to 0. The order of the bits is indicated from the lower frequency to the higher frequency. The puncturing indication bit setting is an example and can be used in the opposite direction to the above.

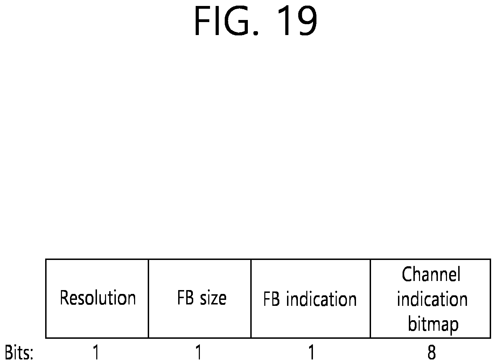

3-A-i-5. The Partial BW info can be configured as shown in Fig. 19.

FIG. 19 shows another example of a Partial BW info field included in a STA info field of a newly defined NDPA frame in a next-generation wireless LAN system.

3-A-ii. Partial BW info configured as in Fig. 19 can be used in each BW as follows to identify puncturing information or information on requested feedback BW.

3-A-ii-1. For example, Partial BW info of Fig. 19 can be indicated as follows according to BW.

3-A-ii-1-A. 80MHz case

3-A-ii-1-A-i. In the Partial BW info, Resolution is set to 20MHz and FB size is set to 160MHz.

3-A-ii-1-A-ii. FB indication is set to FB1 and channel bitmap 8bit indicates puncturing info using 4bits (b0~b3), and the remaining bits (b4~b7) are reserved and set to 0.

3-A-ii-1-B. 160MHz case

3-A-ii-1-B-i. In the Partial BW info, Resolution is set to 20MHz and FB size is set to 160MHz.

3-A-ii-1-B-ii. FB indication is set to FB1 and puncturing info is indicated in units of 20MHz subchannels from the lower 20MHz frequency to the higher 20MHz frequency within 160MHz using 8-bit channel bitmap.

3-A-ii-1-C. 320MHz case

3-A-ii-1-C-i. In the Partial BW info, Resolution is set to 40MHz and FB size is set to 320MHz.

3-A-ii-1-C-ii. FB indication is set to FB1 and puncturing info is indicated in units of 40MHz subchannels from the lower 40MHz frequency to the higher 40MHz frequency within 320MHz using 8-bit channel bitmap.

3-A-ii-1-D. 480MHz case 1: When puncturing is included in 160MHz that constitutes 480MHz

3-A-ii-1-D-i. In the Partial BW info, Resolution is set to 40MHz and FB size is set to 160MHz.

3-A-ii-1-D-ii. FB indication is set to FB1 or FB2 according to the position of 160MHz FB in 480MHz channelization, and 4 bits out of 8 bits of channel bitmap are used to indicate puncturing info in 40MHz subchannel units from the lower 40MHz frequency to the higher 40MHz frequency within 160MHz. The remaining 4 bits are reserved and set to 0.

3-A-ii-1-E. 480MHz case 2: When puncturing is included in 320MHz that constitutes 480MHz

3-A-ii-1-E-i. In the Partial BW info, Resolution is set to 40MHz and FB size is set to 320MHz.

3-A-ii-1-E-ii. FB indication is set to FB1 or FB2 according to the position of 320MHz FB in 480MHz channelization, and puncturing info is indicated in units of 40MHz subchannels from the lower 40MHz frequency to the higher 40MHz frequency within 320MHz using channel bitmap 8bit.

3-A-ii-1-F. 560MHz case 1: When puncturing is included in 320MHz that constitutes 560MHz

3-A-ii-1-G. 560MHz case 2: When puncturing is included in 240MHz that constitutes 560MHz

3-A-ii-1-G-i. In the Partial BW info, Resolution is set to 40MHz and FB size is both set to 320MHz. Using 8-bit channel bitmap, puncturing info is indicated in 40MHz subchannel units from the lower 40MHz frequency to the higher 40MHz frequency within 320MHz. However, since 80MHz out of the 320MHz is punctured, MSB 2 bits or LSB 2 bits of the channel bitmap 8-bit are always set to the punctured case.

3-A-ii-1-H. 640MHz

3-A-ii-1-H-i. In the Partial BW info, the Resolution is set to 40MHz and the FB size is set to 320MHz.

3-A-ii-1-H-ii. FB indication is set to FB1 or FB2 according to the position of 320MHz FB in 640MHz channelization, and puncturing info is indicated in units of 40MHz subchannels from the lower 40MHz frequency to the higher 40MHz frequency within 320MHz using the channel bitmap 8bit.

4. Method for supporting various puncturing patterns and puncturing of two or more holes

4-A. Resolution for puncturing or request feedback channel is considered 20/40MHz

4-A-i. 20MHz resolution is applied for 160MHz or less

4-A-ii. 40MHz resolution is applied for 320MHz or more

4-A-iii. Considering 20MHz operating STA in wide bandwidth, 20MHz resolution can be considered even at 320MHz, and 40MHz resolution can be considered for BW larger than 320MHz. Therefore, 20MHz resolution can be applied for 20/40/80/160/320MHz, and 40MHz resolution can be applied for 480/560/640.

4-A-iv. In order to indicate the information, a partial BW info field is configured including 1-bit resolution info.

4-B. The channel bitmap is configured as 16 bits to support various patterns and puncturing of more than two holes.

4-B-i. Depending on the BW, some bits of the bitmap are reserved and set to 0.

4-B-ii. For example, in the case of 480MHz, among the 16 bits that configure the bitmap, b0~B11 are used and the remaining B12~B15 are reserved and set to 0.

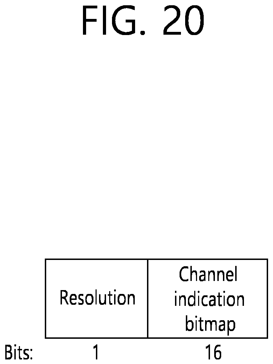

4-C. The partial BW field is configured as shown in Fig. 20.

4-C-i. Partial BW info configured as 17 bits

FIG. 20 shows another example of a Partial BW info field included in a STA info field of a newly defined NDPA frame in a next-generation wireless LAN system.

4-D. When configuring a partial BW info field considering various puncturing patterns as in Fig. 20, the STA info field can be configured with 5/6/8 bytes to include the above information in the STA info field.

4-D-i. Considering the existing STA info size, the partial BW info field can be extended in 2-byte units.

FB1 and FB2 used in this specification can be used as an upper frequency block or a lower frequency block.

Each bit value setting proposed in this specification is an example, and the bit setting for indicating the above-described information can be set differently.

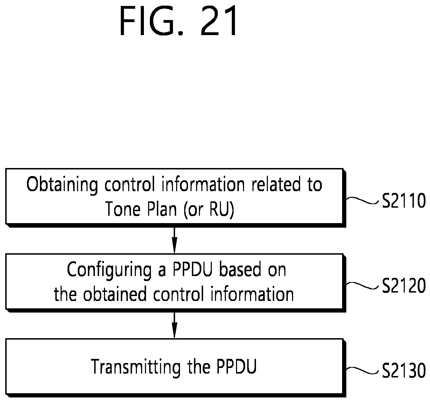

FIG. 21 is a flowchart illustrating the operation of the transmitting apparatus/device according to the present embodiment.

The example of FIG. 21 may be performed by a transmitting device (AP and/or non-AP STA).

Some of each step (or detailed sub-step to be described later) of the example of FIG. 21 may be skipped/omitted.

Through step S2110, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2120, the transmitting device may construct/generate a PPDU based on the acquired control information. Configuring/generating the PPDU may include configuring/generating each field of the PPDU. That is, step S2120 includes configuring the EHT-SIG field including control information about the tone plan. That is, step S2120 includes configuring a field including control information (e.g., N bitmap) indicating the size/position of the RU; and/or configuring a field including an identifier of an STA receiving the RU (e.g., AID).

Also, step S2120 may include generating an STF/LTF sequence transmitted through a specific RU. The STF/LTF sequence may be generated based on a preset STF generation sequence/LTF generation sequence.

Also, step S2120 may include generating a data field (i.e., MPDU) transmitted through a specific RU.

The transmitting device may transmit the PPDU constructed through step S2120 to the receiving device based on step S2130.

While performing step S2130, the transmitting device may perform at least one of operations such as CSD, Spatial Mapping, IDFT/IFFT operation, and GI insertion.

A signal/field/sequence constructed according to the present specification may be transmitted in the form of FIG. 10.

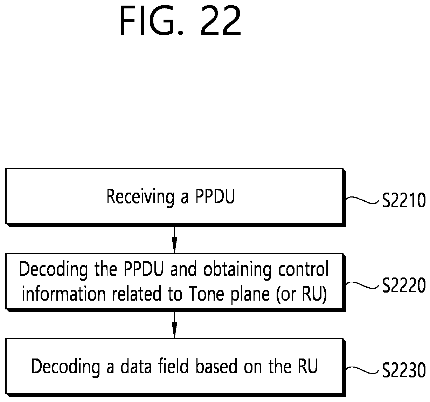

FIG. 22 is a flowchart illustrating the operation of the receiving apparatus/device according to the present embodiment.

The aforementioned PPDU may be received according to the example of FIG. 22.

The example of FIG. 22 may be performed by a receiving apparatus/device (AP and/or non-AP STA).

Some of each step (or detailed sub-step to be described later) of the example of FIG. 22 may be skipped/omitted.

The receiving device (receiving STA) may receive all or part of the PPDU through step S2210. The received signal may be in the form of FIG. 10.

A sub-step of step S2210 may be determined based on step S2130 of FIG. 21. That is, in step S2210, an operation of restoring the result of the CSD, Spatial Mapping, IDFT/IFFT operation, and GI insertion operation applied in step S2130 may be performed.

In step S2220, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S2230, the receiving device may decode the remaining part of the PPDU based on information about the tone plan (i.e., RU) acquired through step S2220. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S2230 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 22.

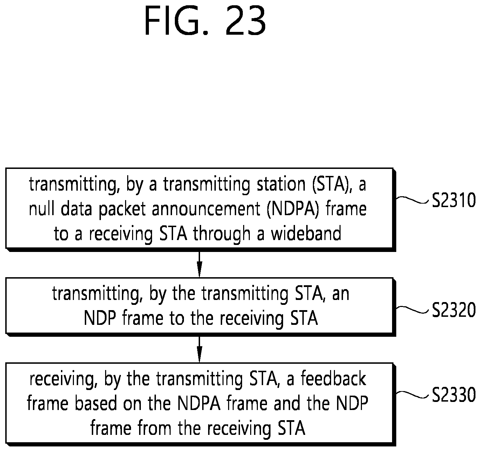

FIG. 23 is a flow diagram illustrating a procedure for receiving a feedback frame by a transmitting STA according to the present embodiment.

The example of FIG. 23 may be performed in a network environment in which a next generation WLAN system (IEEE 802.11be or EHT WLAN system) is supported. The next generation wireless LAN system is a WLAN system that is enhanced from an 802.11ax system and may, therefore, satisfy backward compatibility with the 802.11ax system.

The example of FIG. 23 is performed in a transmitting STA, and the transmitting STA may correspond to a beamformer or an access point (AP). The receiving STA of FIG. 23 may correspond to a beamformee or at least one STA (station).

This embodiment proposes a method of configuring an information field for a partial band of an NDPA frame for channel sounding feedback of a receiving STA operating only at 20 MHz in a 320 MHz band.

In step S2310, a transmitting station (STA) transmits a Null Data Packet Announcement (NDPA) frame to a receiving STA through a wideband.

In step S2320, the transmitting STA transmits an NDP frame to the receiving STA.

In step S2330, the transmitting STA receives a feedback frame based on the NDPA frame and the NDP frame from the receiving STA.

The NDPA frame includes a STA information field for the receiving STA. The STA information field includes information on a partial band, and a Reserved bit. The Reserved bit may be set to a B20 bit (or one of a B29 bit and a B31 bit) of the STA information field.

If/Based on the wideband has/having a bandwidth exceeding 320 MHz, the Reserved bit is set to 1, and a channel unit requesting feedback information is set to 80 MHz.

The information on the partial band includes a bitmap consisting of first to ninth bits. The second to ninth bits are used to request feedback information for the lowest frequency 80 MHz channel to the highest frequency 80 MHz channel in the wideband.

Based on the wideband having the bandwidth exceeding 320 MHz, the first bit may be reserved. Based on the wideband having a bandwidth less than or equal to 320 MHz, the Reserved bit may be set to 0, and the first bit may include information on a unit requesting feedback information.

Based on the wideband having a bandwidth of less than 320 MHz, the first bit may be set to 0, and the second to ninth bits may be used to request feedback information for the lowest frequency 20 MHz channel to the highest frequency 20 MHz channel in the wideband.

Based on the wideband having a bandwidth of 320 MHz, the first bit may be set to 1, and the second to ninth bits may be used to request feedback information for the lowest frequency 40 MHz channel to the highest frequency 40 MHz channel in the wideband.

Based on the wideband being 480 MHz, Most Significant Bit (MSB) 2 bits or Least Significant Bit (LSB) 2 bits among the second to ninth bits are set to 0 or reserved.

Based on the second and third bits being set to 0 or reserved, the fourth bit may be a bit requesting feedback information for the lowest frequency 80 MHz channel in the 480 MHz, the fifth bit may be a bit requesting feedback information for the second lowest frequency 80 MHz channel in the 480 MHz, the sixth bit may be a bit requesting feedback information for the third lowest frequency 80 MHz channel in the 480 MHz, the seventh bit may be a bit requesting feedback information for the fourth lowest frequency 80 MHz channel in the 480 MHz, the eighth bit may be a bit requesting feedback information for the fifth lowest frequency 80 MHz channel in the 480 MHz, and the ninth bit may be a bit requesting feedback information for the highest frequency 80 MHz channel in the 480 MHz.

Based on the eighth and ninth bits being set to 0 or reserved, the second bit may be a bit requesting feedback information for the lowest frequency 80 MHz channel in the 480MHz, the third bit may be a bit requesting feedback information for the second lowest frequency 80 MHz channel in the 480MHz, the fourth bit may be a bit requesting feedback information for the third lowest frequency 80 MHz channel in the 480MHz, the fifth bit may be a bit requesting feedback information for the fourth lowest frequency 80 MHz channel in the 480MHz, the sixth bit may be a bit requesting feedback information for the fifth lowest frequency 80 MHz channel in the 480MHz, and the seventh bit may be a bit requesting feedback information for the highest frequency 80 MHz channel in the 480MHz.

For example, if the Reserved bit is set to 1 and the second to ninth bits of the bitmap are set to 11000000 (the first bit is reserved and the eighth and ninth bits are set to 0), the transmitting STA may request feedback information for the lowest frequency 80MHz channel and the second lowest frequency 80MHz channel in the 480MHz band based on the NDPA frame.

Based on the wideband being 560 MHz, a MSB 1 bit or a LSB 1 bit among the second to ninth bits may be set to 0 or reserved.

Based on the second bit being set to 0 or reserved, the third bit may be a bit requesting feedback information for the lowest frequency 80 MHz channel in the 560 MHz, the fourth bit may be a bit requesting feedback information for the second lowest frequency 80 MHz channel in the 560 MHz, the fifth bit may be a bit requesting feedback information for the third lowest frequency 80 MHz channel in the 560 MHz, the sixth bit may be a bit requesting feedback information for the fourth lowest frequency 80 MHz channel in the 560 MHz, the seventh bit may be a bit requesting feedback information for the fifth lowest frequency 80 MHz channel in the 560 MHz, and the eighth bit may be a bit requesting feedback information for the sixth lowest frequency 80 MHz channel in the 560 MHz, and the ninth bit may be a bit requesting feedback information for the highest frequency 80 MHz channel in the 560MHz.

Based the ninth bit being set to 0 or reserved, the second bit may be a bit requesting feedback information for the lowest frequency 80MHz channel in the 560MHz, the third bit may be a bit requesting feedback information for the second lowest frequency 80MHz channel in the 560MHz, the fourth bit may be a bit requesting feedback information for the third lowest frequency 80MHz channel in the 560MHz, the fifth bit may be a bit requesting feedback information for the fourth lowest frequency 80MHz channel in the 560MHz, the sixth bit may be a bit requesting feedback information for the fifth lowest frequency 80MHz channel in the 560MHz, the seventh bit may be a bit requesting feedback information for the sixth lowest frequency 80MHz channel in the 560MHz, and the eighth bit may be a bit requesting feedback information for the highest frequency 80MHz channel in the 560MHz.

For example, if the Reserved bit is set to 1 and the second to ninth bits of the bitmap are set to 01100001 (the first bit is reserved and the second bit is set to 0), the transmitting STA may request feedback information for the lowest frequency 80 MHz channel, the second lowest frequency 80 MHz channel, and the highest frequency 80 MHz channel in the 560 MHz band based on the NDPA frame.

Based on the wideband being 640 MHz, the second bit may be a bit requesting feedback information for the lowest frequency 80 MHz channel in the 640MHz, the third bit may be a bit requesting feedback information for the second lowest frequency 80 MHz channel in the 640MHz, the fourth bit may be a bit requesting feedback information for the third lowest frequency 80 MHz channel in the 640MHz, the fifth bit may be a bit requesting feedback information for the fourth lowest frequency 80 MHz channel in the 640MHz, the sixth bit may be a bit requesting feedback information for the fifth lowest frequency 80 MHz channel in the 640MHz, the seventh bit may be a bit requesting feedback information for the sixth lowest frequency 80 MHz channel in the 640MHz, the eighth bit may be a bit requesting feedback information for the seventh lowest frequency 80 MHz channel in the 640MHz, and the ninth bit may be a bit requesting feedback information for the highest frequency 80 MHz channel in the 640MHz.

That is, the present embodiment proposes a method of reusing the NDPA frame defined in 802.11be (specifically, the Partial BW Info field and the Reserved bit of a STA Info field of an EHT NDPA frame) even for a band exceeding 320 MHz. In particular, the present embodiment proposes a method of requesting channel state feedback for the partial band by using a different subchannel resolution by using the Reserved bit in the NDPA frame. Accordingly, the beamformer can request and receive channel state feedback for the partial band even for the wideband exceeding 320 MHz, so that it can efficiently support Multi-Input Multi-Output (MIMO) beamforming, and the effect of improving the throughput of the entire system can occur. In addition, the effect of performing efficient sounding procedures and signal transmission/reception through OFDMA can also occur through this embodiment.

Another embodiment proposes a method for requesting channel state feedback for a partial band within a wideband by indicating preamble puncturing for a specific frequency block (or segment) constituting a band exceeding 320 MHz. Another embodiment proposes a method for configuring a Partial BW Info field by applying a feedback resolution of 20 MHz or 40 MHz, the same as before, to a band exceeding 320 MHz. Another embodiment proposes a method for configuring a Partial BW Info field to support various puncturing patterns and puncturing of two or more holes for a band exceeding 320 MHz. The three embodiments described above are all the methods described above.

If the receiving STA is one STA, a non-Trigger Based (TB) sounding method is used, such as steps S2210 to S2230. However, if the receiving STA is a plurality of STAs (i.e., in the case of MU feedback), a TB sounding method that triggers the feedback frame using a Beamforming Report Poll (BFRP) trigger frame may be used between steps S2220 and S2230. Specifically, the transmitting STA can transmit the BFRP trigger frame after transmitting the NDP frame, and receive a feedback frame triggered by the BFRP trigger frame. The BFRP trigger frame includes at least one user information field, and only a receiving STA identified by the user information field can transmit the feedback frame.

The feedback frame may include channel state information for the partial band requested based on the bitmap.

The NDP frame and the feedback frame may be transmitted in the same band as the NDPA frame (the 320 MHz band). Partial bands for which feedback is requested through the bitmap may be punctured within the wideband or may be composed of various RUs or Multi Resource Units (MRUs). The NDP frame may be defined as a variant of an Extremely High Throughput (EHT) Multi User (MU) PPDU.

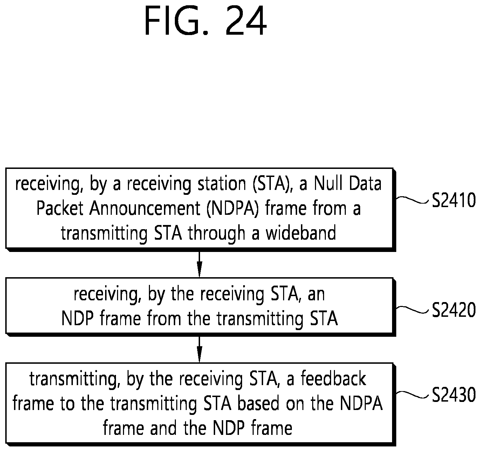

FIG. 24 is a flow diagram illustrating a procedure for transmitting a feedback frame by a receiving STA according to the present embodiment.

The example of FIG. 24 may be performed in a network environment in which a next generation WLAN system (IEEE 802.11be or EHT WLAN system) is supported. The next generation wireless LAN system is a WLAN system that is enhanced from an 802.11ax system and may, therefore, satisfy backward compatibility with the 802.11ax system.

The example of FIG. 24 is performed in a receiving STA, and the receiving STA may correspond to a beamformee or at least one STA (station). The transmitting STA of FIG. 24 may correspond to a beamformer or an access point (AP).

This embodiment proposes a method of configuring an information field for a partial band of an NDPA frame for channel sounding feedback of a receiving STA operating only at 20 MHz in a 320 MHz band.

In step S2410, a receiving STA (station) receives a Null Data Packet Announcement (NDPA) frame from a transmitting STA through a wideband.

In step S2420, the receiving STA receives an NDP frame from the transmitting STA.

In step S2430, the receiving STA transmits a feedback frame to the transmitting STA based on the NDPA frame and the NDP frame.

The NDPA frame includes a STA information field for the receiving STA. The STA information field includes information on a partial band, and a Reserved bit. The Reserved bit may be set to a B20 bit (or one of a B29 bit and a B31 bit) of the STA information field.

If/Based on the wideband has/having a bandwidth exceeding 320 MHz, the Reserved bit is set to 1, and a channel unit requesting feedback information is set to 80 MHz.

The information on the partial band includes a bitmap consisting of first to ninth bits. The second to ninth bits are used to request feedback information for the lowest frequency 80 MHz channel to the highest frequency 80 MHz channel in the wideband.

Based on the wideband having the bandwidth exceeding 320 MHz, the first bit may be reserved. Based on the wideband having a bandwidth less than or equal to 320 MHz, the Reserved bit may be set to 0, and the first bit may include information on a unit requesting feedback information.

Based on the wideband having a bandwidth of less than 320 MHz, the first bit may be set to 0, and the second to ninth bits may be used to request feedback information for the lowest frequency 20 MHz channel to the highest frequency 20 MHz channel in the wideband.

Based on the wideband having a bandwidth of 320 MHz, the first bit may be set to 1, and the second to ninth bits may be used to request feedback information for the lowest frequency 40 MHz channel to the highest frequency 40 MHz channel in the wideband.

Based on the wideband being 480 MHz, Most Significant Bit (MSB) 2 bits or Least Significant Bit (LSB) 2 bits among the second to ninth bits are set to 0 or reserved.

Based on the second and third bits being set to 0 or reserved, the fourth bit may be a bit requesting feedback information for the lowest frequency 80 MHz channel in the 480 MHz, the fifth bit may be a bit requesting feedback information for the second lowest frequency 80 MHz channel in the 480 MHz, the sixth bit may be a bit requesting feedback information for the third lowest frequency 80 MHz channel in the 480 MHz, the seventh bit may be a bit requesting feedback information for the fourth lowest frequency 80 MHz channel in the 480 MHz, the eighth bit may be a bit requesting feedback information for the fifth lowest frequency 80 MHz channel in the 480 MHz, and the ninth bit may be a bit requesting feedback information for the highest frequency 80 MHz channel in the 480 MHz.

Based on the eighth and ninth bits being set to 0 or reserved, the second bit may be a bit requesting feedback information for the lowest frequency 80 MHz channel in the 480MHz, the third bit may be a bit requesting feedback information for the second lowest frequency 80 MHz channel in the 480MHz, the fourth bit may be a bit requesting feedback information for the third lowest frequency 80 MHz channel in the 480MHz, the fifth bit may be a bit requesting feedback information for the fourth lowest frequency 80 MHz channel in the 480MHz, the sixth bit may be a bit requesting feedback information for the fifth lowest frequency 80 MHz channel in the 480MHz, and the seventh bit may be a bit requesting feedback information for the highest frequency 80 MHz channel in the 480MHz.

For example, if the Reserved bit is set to 1 and the second to ninth bits of the bitmap are set to 11000000 (the first bit is reserved and the eighth and ninth bits are set to 0), the transmitting STA may request feedback information for the lowest frequency 80MHz channel and the second lowest frequency 80MHz channel in the 480MHz band based on the NDPA frame.

Based on the wideband being 560 MHz, a MSB 1 bit or a LSB 1 bit among the second to ninth bits may be set to 0 or reserved.

Based on the second bit being set to 0 or reserved, the third bit may be a bit requesting feedback information for the lowest frequency 80 MHz channel in the 560 MHz, the fourth bit may be a bit requesting feedback information for the second lowest frequency 80 MHz channel in the 560 MHz, the fifth bit may be a bit requesting feedback information for the third lowest frequency 80 MHz channel in the 560 MHz, the sixth bit may be a bit requesting feedback information for the fourth lowest frequency 80 MHz channel in the 560 MHz, the seventh bit may be a bit requesting feedback information for the fifth lowest frequency 80 MHz channel in the 560 MHz, and the eighth bit may be a bit requesting feedback information for the sixth lowest frequency 80 MHz channel in the 560 MHz, and the ninth bit may be a bit requesting feedback information for the highest frequency 80 MHz channel in the 560MHz.

Based the ninth bit being set to 0 or reserved, the second bit may be a bit requesting feedback information for the lowest frequency 80MHz channel in the 560MHz, the third bit may be a bit requesting feedback information for the second lowest frequency 80MHz channel in the 560MHz, the fourth bit may be a bit requesting feedback information for the third lowest frequency 80MHz channel in the 560MHz, the fifth bit may be a bit requesting feedback information for the fourth lowest frequency 80MHz channel in the 560MHz, the sixth bit may be a bit requesting feedback information for the fifth lowest frequency 80MHz channel in the 560MHz, the seventh bit may be a bit requesting feedback information for the sixth lowest frequency 80MHz channel in the 560MHz, and the eighth bit may be a bit requesting feedback information for the highest frequency 80MHz channel in the 560MHz.

For example, if the Reserved bit is set to 1 and the second to ninth bits of the bitmap are set to 01100001 (the first bit is reserved and the second bit is set to 0), the transmitting STA may request feedback information for the lowest frequency 80 MHz channel, the second lowest frequency 80 MHz channel, and the highest frequency 80 MHz channel in the 560 MHz band based on the NDPA frame.

Based on the wideband being 640 MHz, the second bit may be a bit requesting feedback information for the lowest frequency 80 MHz channel in the 640MHz, the third bit may be a bit requesting feedback information for the second lowest frequency 80 MHz channel in the 640MHz, the fourth bit may be a bit requesting feedback information for the third lowest frequency 80 MHz channel in the 640MHz, the fifth bit may be a bit requesting feedback information for the fourth lowest frequency 80 MHz channel in the 640MHz, the sixth bit may be a bit requesting feedback information for the fifth lowest frequency 80 MHz channel in the 640MHz, the seventh bit may be a bit requesting feedback information for the sixth lowest frequency 80 MHz channel in the 640MHz, the eighth bit may be a bit requesting feedback information for the seventh lowest frequency 80 MHz channel in the 640MHz, and the ninth bit may be a bit requesting feedback information for the highest frequency 80 MHz channel in the 640MHz.

That is, the present embodiment proposes a method of reusing the NDPA frame defined in 802.11be (specifically, the Partial BW Info field and the Reserved bit of a STA Info field of an EHT NDPA frame) even for a band exceeding 320 MHz. In particular, the present embodiment proposes a method of requesting channel state feedback for the partial band by using a different subchannel resolution by using the Reserved bit in the NDPA frame. Accordingly, the beamformer can request and receive channel state feedback for the partial band even for the wideband exceeding 320 MHz, so that it can efficiently support Multi-Input Multi-Output (MIMO) beamforming, and the effect of improving the throughput of the entire system can occur. In addition, the effect of performing efficient sounding procedures and signal transmission/reception through OFDMA can also occur through this embodiment.

Another embodiment proposes a method for requesting channel state feedback for a partial band within a wideband by indicating preamble puncturing for a specific frequency block (or segment) constituting a band exceeding 320 MHz. Another embodiment proposes a method for configuring a Partial BW Info field by applying a feedback resolution of 20 MHz or 40 MHz, the same as before, to a band exceeding 320 MHz. Another embodiment proposes a method for configuring a Partial BW Info field to support various puncturing patterns and puncturing of two or more holes for a band exceeding 320 MHz. The three embodiments described above are all the methods described above.

If the receiving STA is one STA, a non-Trigger Based (TB) sounding method is used, such as steps S2310 to S2330. However, if the receiving STA is a plurality of STAs (i.e., in the case of MU feedback), a TB sounding method that triggers the feedback frame using a Beamforming Report Poll (BFRP) trigger frame may be used between steps S2320 and S2330. Specifically, the transmitting STA can transmit the BFRP trigger frame after transmitting the NDP frame, and receive a feedback frame triggered by the BFRP trigger frame. The BFRP trigger frame includes at least one user information field, and only a receiving STA identified by the user information field can transmit the feedback frame.

The feedback frame may include channel state information for the partial band requested based on the bitmap.

The NDP frame and the feedback frame may be transmitted in the same band as the NDPA frame (the 320 MHz band). Partial bands for which feedback is requested through the bitmap may be punctured within the wideband or may be composed of various RUs or Multi Resource Units (MRUs). The NDP frame may be defined as a variant of an Extremely High Throughput (EHT) Multi User (MU) PPDU.

## 4. Device configuration

The technical features of the present disclosure may be applied to various devices and methods. For example, the technical features of the present disclosure may be performed/supported through the device(s) of FIG. 1 and/or FIG. 11. For example, the technical features of the present disclosure may be applied to only part of FIG. 1 and/or FIG. 11. For example, the technical features of the present disclosure may be implemented based on the processing chip(s) 114 and 124 of FIG. 1, or implemented based on the processor(s) 111 and 121 and the memory(s) 112 and 122, or implemented based on the processor 610 and the memory 620 of FIG. 11. For example, the device according to the present disclosure receives a Null Data Packet Announcement (NDPA) frame from a transmitting station (STA) through a wideband; receives an NDP frame from the transmitting STA; and transmits a feedback frame to the transmitting STA based on the NDPA frame and the NDP frame.

The technical features of the present disclosure may be implemented based on a computer readable medium (CRM). For example, a CRM according to the present disclosure is at least one computer readable medium including instructions designed to be executed by at least one processor.

The CRM may store instructions that perform operations including receiving a Null Data Packet Announcement (NDPA) frame from a transmitting station (STA) through a wideband; receiving an NDP frame from the transmitting STA; and transmitting a feedback frame to the transmitting STA based on the NDPA frame and the NDP frame. At least one processor may execute the instructions stored in the CRM according to the present disclosure. At least one processor related to the CRM of the present disclosure may be the processor 111, 121 of FIG. 1, the processing chip 114, 124 of FIG. 1, or the processor 610 of FIG. 11. Meanwhile, the CRM of the present disclosure may be the memory 112, 122 of FIG. 1, the memory 620 of FIG. 11, or a separate external memory/storage medium/disk.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together.

However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless local area network (WLAN) system, the method comprising:

   receiving, by a receiving station (STA), a Null Data Packet Announcement (NDPA) frame from a transmitting STA through a wideband;
   receiving, by the receiving STA, an NDP frame from the transmitting STA; and
   transmitting, by the receiving STA, a feedback frame to the transmitting STA based on the NDPA frame and the NDP frame,
   wherein the NDPA frame includes a STA information field for the receiving STA,
   wherein the STA information field includes information on a partial band, and a Reserved bit,
   wherein based on the wideband having a bandwidth exceeding 320 MHz, the Reserved bit is set to 1, and a channel unit requesting feedback information is set to 80 MHz,
   wherein the information on the partial band includes a bitmap consisting of first to ninth bits, and
   wherein the second to ninth bits are used to request feedback information for the lowest frequency 80 MHz channel to the highest frequency 80 MHz channel in the wideband.

2. The method of claim 1, wherein based on the wideband having the bandwidth exceeding 320 MHz, the first bit is reserved, and
   wherein based on the wideband having a bandwidth less than or equal to 320 MHz, the Reserved bit is set to 0, and the first bit includes information on a unit requesting feedback information.

3. The method of claim 2, wherein based on the wideband having a bandwidth of less than 320 MHz, the first bit is set to 0, and the second to ninth bits are used to request feedback information for the lowest frequency 20 MHz channel to the highest frequency 20 MHz channel in the wideband.

4. The method of claim 2, wherein based on the wideband having a bandwidth of 320 MHz, the first bit is set to 1, and the second to ninth bits are used to request feedback information for the lowest frequency 40 MHz channel to the highest frequency 40 MHz channel in the wideband.

5. The method of claim 1, wherein the Reserved bit is set to a B20 bit of the STA information field.

6. The method of claim 1, wherein based on the wideband being 480 MHz, Most Significant Bit (MSB) 2 bits or Least Significant Bit (LSB) 2 bits among the second to ninth bits are set to 0 or reserved,

   wherein based on the second and third bits being set to 0 or reserved, the fourth bit is a bit requesting feedback information for the lowest frequency 80 MHz channel in the 480 MHz, the fifth bit is a bit requesting feedback information for the second lowest frequency 80 MHz channel in the 480 MHz, the sixth bit is a bit requesting feedback information for the third lowest frequency 80 MHz channel in the 480 MHz, the seventh bit is a bit requesting feedback information for the fourth lowest frequency 80 MHz channel in the 480 MHz, the eighth bit is a bit requesting feedback information for the fifth lowest frequency 80 MHz channel in the 480 MHz, and the ninth bit is a bit requesting feedback information for the highest frequency 80 MHz channel in the 480 MHz,
   wherein based on the eighth and ninth bits being set to 0 or reserved, the second bit is a bit requesting feedback information for the lowest frequency 80 MHz channel in the 480MHz, the third bit is a bit requesting feedback information for the second lowest frequency 80 MHz channel in the 480MHz, the fourth bit is a bit requesting feedback information for the third lowest frequency 80 MHz channel in the 480MHz, the fifth bit is a bit requesting feedback information for the fourth lowest frequency 80 MHz channel in the 480MHz, the sixth bit is a bit requesting feedback information for the fifth lowest frequency 80 MHz channel in the 480MHz, and the seventh bit is a bit requesting feedback information for the highest frequency 80 MHz channel in the 480MHz.

7. The method of claim 1, wherein based on the wideband being 560 MHz, a MSB 1 bit or a LSB 1 bit among the second to ninth bits is set to 0 or reserved,

wherein based on the second bit being set to 0 or reserved, the third bit is a bit requesting feedback information for the lowest frequency 80 MHz channel in the 560 MHz, the fourth bit is a bit requesting feedback information for the second lowest frequency 80 MHz channel in the 560 MHz, the fifth bit is a bit requesting feedback information for the third lowest frequency 80 MHz channel in the 560 MHz, the sixth bit is a bit requesting feedback information for the fourth lowest frequency 80 MHz channel in the 560 MHz, the seventh bit is a bit requesting feedback information for the fifth lowest frequency 80 MHz channel in the 560 MHz, and the eighth bit is a bit requesting feedback information for the sixth lowest frequency 80 MHz channel in the 560 MHz, and the ninth bit is a bit requesting feedback information for the highest frequency 80 MHz channel in the 560MHz, and
wherein based the ninth bit being set to 0 or reserved, the second bit is a bit requesting feedback information for the lowest frequency 80MHz channel in the 560MHz, the third bit is a bit requesting feedback information for the second lowest frequency 80MHz channel in the 560MHz, the fourth bit is a bit requesting feedback information for the third lowest frequency 80MHz channel in the 560MHz, the fifth bit is a bit requesting feedback information for the fourth lowest frequency 80MHz channel in the 560MHz, the sixth bit is a bit requesting feedback information for the fifth lowest frequency 80MHz channel in the 560MHz, the seventh bit is a bit requesting feedback information for the sixth lowest frequency 80MHz channel in the 560MHz, and the eighth bit is a bit requesting feedback information for the highest frequency 80MHz channel in the 560MHz.

8. The method of claim 1, wherein based on the wideband being 640 MHz, the second bit is a bit requesting feedback information for the lowest frequency 80 MHz channel in the 640MHz, the third bit is a bit requesting feedback information for the second lowest frequency 80 MHz channel in the 640MHz, the fourth bit is a bit requesting feedback information for the third lowest frequency 80 MHz channel in the 640MHz, the fifth bit is a bit requesting feedback information for the fourth lowest frequency 80 MHz channel in the 640MHz, the sixth bit is a bit requesting feedback information for the fifth lowest frequency 80 MHz channel in the 640MHz, the seventh bit is a bit requesting feedback information for the sixth lowest frequency 80 MHz channel in the 640MHz, the eighth bit is a bit requesting feedback information for the seventh lowest frequency 80 MHz channel in the 640MHz, and the ninth bit is a bit requesting feedback information for the highest frequency 80 MHz channel in the 640MHz.

9. The method of claim 1, wherein the feedback frame includes channel state information for the partial band requested based on the bitmap.

10. A receiving station (STA) in a wireless local area network (WLAN) system, the receiving STA comprising:

a memory;
a transceiver; and
a processor being operatively connected to the memory and the transceiver,
wherein the processor is configured to:

receive a Null Data Packet Announcement (NDPA) frame from a transmitting STA through a wideband;
receive an NDP frame from the transmitting STA; and
transmit a feedback frame to the transmitting STA based on the NDPA frame and the NDP frame,
wherein the NDPA frame includes a STA information field for the receiving STA,
wherein the STA information field includes information on a partial band, and a Reserved bit,
wherein based on the wideband having a bandwidth exceeding 320 MHz, the Reserved bit is set to 1, and a channel unit requesting feedback information is set to 80 MHz,
wherein the information on the partial band includes a bitmap consisting of first to ninth bits, and
wherein the second to ninth bits are used to request feedback information for the lowest frequency 80 MHz channel to the highest frequency 80 MHz channel in the wideband.

11. A method in a wireless local area network (WLAN) system, the method comprising:

transmitting, by a transmitting station (STA), a null data packet announcement (NDPA) frame to a receiving STA through a wideband;

transmitting, by the transmitting STA, an NDP frame to the receiving STA; and

receiving, by the transmitting STA, a feedback frame based on the NDPA frame and the NDP frame from the receiving STA,

wherein the NDPA frame includes a STA information field for the receiving STA,

wherein the STA information field includes information on a partial band, and a Reserved bit,

wherein based on the wideband having a bandwidth exceeding 320 MHz, the Reserved bit is set to 1, and a channel unit requesting feedback information is set to 80 MHz,

wherein the information on the partial band includes a bitmap consisting of first to ninth bits, and

wherein the second to ninth bits are used to request feedback information for the lowest frequency 80 MHz channel to the highest frequency 80 MHz channel in the wideband.

12. The method of claim 11, wherein based on the wideband having the bandwidth exceeding 320 MHz, the first bit is reserved, and

wherein based on the wideband having a bandwidth less than or equal to 320 MHz, the Reserved bit is set to 0, and the first bit includes information on a unit requesting feedback information.

13. The method of claim 12, wherein based on the wideband having a bandwidth of less than 320 MHz, the first bit is set to 0, and the second to ninth bits are used to request feedback information for the lowest frequency 20 MHz channel to the highest frequency 20 MHz channel in the wideband.

14. The method of claim 12, wherein based on the wideband having a bandwidth of 320 MHz, the first bit is set to 1, and the second to ninth bits are used to request feedback information for the lowest frequency 40 MHz channel to the highest frequency 40 MHz channel in the wideband.

15. The method of claim 11, wherein the Reserved bit is set to a B20 bit of the STA information field.

16. The method of claim 11, wherein based on the wideband being 480 MHz, Most Significant Bit (MSB) 2 bits or Least Significant Bit (LSB) 2 bits among the second to ninth bits are set to 0 or reserved,

wherein based on the second and third bits being set to 0 or reserved, the fourth bit is a bit requesting feedback information for the lowest frequency 80 MHz channel in the 480 MHz, the fifth bit is a bit requesting feedback information for the second lowest frequency 80 MHz channel in the 480 MHz, the sixth bit is a bit requesting feedback information for the third lowest frequency 80 MHz channel in the 480 MHz, the seventh bit is a bit requesting feedback information for the fourth lowest frequency 80 MHz channel in the 480 MHz, the eighth bit is a bit requesting feedback information for the fifth lowest frequency 80 MHz channel in the 480 MHz, and the ninth bit is a bit requesting feedback information for the highest frequency 80 MHz channel in the 480 MHz,

wherein based on the eighth and ninth bits being set to 0 or reserved, the second bit is a bit requesting feedback information for the lowest frequency 80 MHz channel in the 480MHz, the third bit is a bit requesting feedback information for the second lowest frequency 80 MHz channel in the 480MHz, the fourth bit is a bit requesting feedback information for the third lowest frequency 80 MHz channel in the 480MHz, the fifth bit is a bit requesting feedback information for the fourth lowest frequency 80 MHz channel in the 480MHz, the sixth bit is a bit requesting feedback information for the fifth lowest frequency 80 MHz channel in the 480MHz, and the seventh bit is a bit requesting feedback information for the highest frequency 80 MHz channel in the 480MHz.

17. The method of claim 11, wherein based on the wideband being 560 MHz, a MSB 1 bit or a LSB 1 bit among the second to ninth bits is set to 0 or reserved,

wherein based on the second bit being set to 0 or reserved, the third bit is a bit requesting feedback information for the lowest frequency 80 MHz channel in the 560 MHz, the fourth bit is a bit requesting feedback information for the second lowest frequency 80 MHz channel in the 560 MHz, the fifth bit is a bit requesting feedback information for the third lowest frequency 80 MHz channel in the 560 MHz, the sixth bit is a bit requesting feedback information for the fourth lowest frequency 80 MHz channel in the 560 MHz, the seventh bit is a bit requesting feedback information for the fifth lowest frequency 80 MHz channel in the 560 MHz, and the eighth bit is a bit requesting feedback information for the sixth lowest frequency 80 MHz channel in the 560 MHz, and the ninth bit is a bit requesting feedback information for the highest frequency 80 MHz channel in the 560MHz, and

wherein based the ninth bit being set to 0 or reserved, the second bit is a bit requesting feedback information for the lowest frequency 80MHz channel in the 560MHz, the third bit is a bit requesting feedback information for the second lowest frequency 80MHz channel in the 560MHz, the fourth bit is a bit requesting feedback information for the third lowest frequency 80MHz channel in the 560MHz, the fifth bit is a bit requesting feedback information for the fourth lowest frequency 80MHz channel in the 560MHz, the sixth bit is a bit requesting feedback information for the fifth lowest frequency 80MHz channel in the 560MHz, the seventh bit is a bit requesting feedback information for the sixth lowest frequency 80MHz channel in the 560MHz, and the eighth bit is a bit requesting feedback information for the highest frequency 80MHz channel in the 560MHz.

18. A transmitting station (STA) in a wireless local area network (WLAN) system, the transmitting STA comprising:

a memory;
a transceiver; and
a processor being operatively connected to the memory and the transceiver,
wherein the processor is configured to:

transmit a null data packet announcement (NDPA) frame to a receiving STA through a wideband;
transmit an NDP frame to the receiving STA; and
receive a feedback frame based on the NDPA frame and the NDP frame from the receiving STA,
wherein the NDPA frame includes a STA information field for the receiving STA,
wherein the STA information field includes information on a partial band, and a Reserved bit,
wherein based on the wideband having a bandwidth exceeding 320 MHz, the Reserved bit is set to 1, and a channel unit requesting feedback information is set to 80 MHz,
wherein the information on the partial band includes a bitmap consisting of first to ninth bits, and
wherein the second to ninth bits are used to request feedback information for the lowest frequency 80 MHz channel to the highest frequency 80 MHz channel in the wideband.

19. A computer readable medium including an instruction being executed by at least one processor and performing a method comprising the steps of:

receiving a Null Data Packet Announcement (NDPA) frame from a transmitting station (STA) through a wideband;
receiving an NDP frame from the transmitting STA; and
transmitting a feedback frame to the transmitting STA based on the NDPA frame and the NDP frame,
wherein the NDPA frame includes a STA information field for the receiving STA,
wherein the STA information field includes information on a partial band, and a Reserved bit,
wherein based on the wideband having a bandwidth exceeding 320 MHz, the Reserved bit is set to 1, and a channel unit requesting feedback information is set to 80 MHz,
wherein the information on the partial band includes a bitmap consisting of first to ninth bits, and
wherein the second to ninth bits are used to request feedback information for the lowest frequency 80 MHz channel to the highest frequency 80 MHz channel in the wideband.

20. A device in a wireless local area network (WLAN) system, the device comprising:

a memory; and
a processor being operatively connected to the memory,
wherein the processor is configured to:

receive a Null Data Packet Announcement (NDPA) frame from a transmitting station (STA) through a wideband;
receive an NDP frame from the transmitting STA; and
transmit a feedback frame to the transmitting STA based on the NDPA frame and the NDP frame,
wherein the NDPA frame includes a STA information field for the receiving STA,
wherein the STA information field includes information on a partial band, and a Reserved bit,
wherein based on the wideband having a bandwidth exceeding 320 MHz, the Reserved bit is set to 1, and a channel unit requesting feedback information is set to 80 MHz,
wherein the information on the partial band includes a bitmap consisting of first to ninth bits, and
wherein the second to ninth bits are used to request feedback information for the lowest frequency 80 MHz channel to the highest frequency 80 MHz channel in the wideband.

# FIG. 1

110

120

1st STA

113

Transceiver

111

Processor

112

Memory

2nd STA

123

Transceiver

121

Processor

122

Memory

(a)

110

120

113 — Transceiver

114 — Processing Chip

111 — Processor

112 — Memory

115 — Software Code

Transceiver — 123

Processing Chip — 124

Processor — 121

Memory — 122

Software Code — 125

(b)

# FIG. 2

# FIG. 3

# FIG. 4

| L-LTF | L-STF | L-SIG | Data |
|-------|-------|-------|------|

PPDU Format (IEEE 802.11a/g)

| L-LTF | L-STF | L-SIG | SIG A | HT-SFT | HT-LFT | • • • | HT-LFT | Data |
|-------|-------|-------|-------|--------|--------|-------|--------|------|

HT PPDU Format (IEEE 802.11n)

| L-LTF | L-STF | L-SIG | VHT-SIG A | VHT-SFT | VHT-LFT | VHT-SIG B | Data |
|-------|-------|-------|-----------|---------|---------|-----------|------|

VHT PPDU Format (IEEE 802.11ac)

| 8μs | 8μs | 4μs | 4μs | 8μs | 4μs per symbol | 4μs | Variable durations per HE-LTF symbol | | | |
|-----|-----|-----|-----|-----|----------------|-----|--------------------------------------|---|---|---|
| L-LTF | L-STF | L-SIG | RL-SIG | HE-SIG A | HE-SIG B | HE-STF | HE-LTF | • • • HE-LTF | Data | PE |

EP 4 489 496 A1

# FIG. 5

FIG. 6

FIG. 7

# FIG. 8

EP 4 489 496 A1

HE-SIG-B field (810)

| Common field (820) | User Specific field (830) |
|---|---|

| Common Bits + CRC + Tail | 2 Users + CRC + Tail | 2 Users + CRC + Tail | . . . | (1 or 2 Users) + CRC + Tail | Padding |
|---|---|---|---|---|---|

1st User Block field     2nd User Block field     last User Block field

# FIG. 9

RU Allocation subfield $01000y_2 y_1 y_0$ = 01000010

| User field 1 | User field 2 | User field 3 | User field 4 | User field 5 | User field 6 | User field 7 | User field 8 |
|---|---|---|---|---|---|---|---|

MU-MIMO allocation

| RU assignment | 106-tone | 26-tone | 26-tone | 26-tone | 26-tone | 26-tone |
|---|---|---|---|---|---|---|
| Number of users per RU | 3 | 1 | 1 | 1 | 1 | 1 |

# FIG. 10

| L-STF | L-LTF | L-SIG | RL-SIG | U-SIG | EHT-SIG | EHT-STF | EHT-LTF | Data |
|-------|-------|-------|--------|-------|---------|---------|---------|------|

# FIG. 11

# FIG. 12

EP 4 489 496 A1

# FIG. 13

EP 4 489 496 A1

One or more sequences

EHT beamformer

| EHT NDP Announcement | SIFS | EHT sounding NDP | SIFS | BFRP Trigger | SIFS |
|---|---|---|---|---|---|

EHT beamformee 1

EHT Compressed Beamforming/CQI 1

EHT beamformee 2

EHT Compressed Beamforming/CQI 2

⋮

⋮

EHT beamformee n

EHT Compressed Beamforming/CQI n

# FIG. 14

| | MAC header | | | | | | | |
|---|---|---|---|---|---|---|---|---|
| Frame Control | Duration | RA | TA | Sounding Dialog Token | STA Info 1 | ・・・ | STA Info n | FCS |

Octets: 2 2 6 6 1 4 4 4

| B0　　　B10 | B11　　　B19 | B20 | B21　　　B24 | B25　　B26 | B27 | B28 | B29　　　B31 |
|---|---|---|---|---|---|---|---|
| AID 11 | Partial BW Info | Reserved | Nc Index | Feedback Type And Ng | Disambiguation | Codebook Size | Reserved |

Bits: 11 9 1 4 2 1 1 3

| B0 | B1　　　B8 |
|---|---|
| Resolution | Feedback bitmap |

Bits: 1 8

# FIG. 15

EP 4 489 496 A1

| UNII5 | | | | | | UNII6 | 6, 7 | UNII7 | | | 7, 8 | UNII8 | |
|---|---|---|---|---|---|---|---|---|---|---|---|---|---|
| 80 | 80 | 80 | 80 | 80 | 80 | 80 | 80 | 80 | 80 | 80 | 80 | 80 | 80 |
| 160 | | 160 | | 160 | | 160 | | 160 | | 160 | | 160 | |
| 320-1 | | | | 320-1 | | | | 320-1 | | | | | |
| | | 320-2 | | | | 320-2 | | | | 320-2 | | | |
| 480-1 | | | | | | 480-1 | | | | | | | |
| | | 480-2 | | | | | | 480-2 | | | | | |
| 560 | | | | | | | 560 | | | | | | |
| 640 | | | | | | | | 160 | | 160 | | 160 | |
| 160 | | 160 | | 160 | | 640 | | | | | | | |

# FIG. 16

| B0 | B1 | B2 | B9 |
|---|---|---|---|
| Resolution | | Feedback bitmap | |

Bits: 2        8

# FIG. 17

EP 4 489 496 A1

| AID11 | Partial BW info | Nc Index | Feedback Type and Ng | Disambiguation | Codebook Size | Reserved |
|---|---|---|---|---|---|---|

B10  B10  B11 — B20  B21  B24  B25 — B26   B27   B28   B29 — B31

Bits:   11   10   4   2   1   1   3

# FIG. 18

| AID11 | FB Indication | Partial BW info | ··· |
|-------|---------------|-----------------|-----|
| Bits:  11 | 1/2/3 | 9 | |

# FIG. 19

| Resolution | FB size | FB indication | Channel indication bitmap |
|---|---|---|---|
| Bits: 1 | 1 | 1 | 8 |

# FIG. 20

| Resolution | Channel indication bitmap |
|------------|---------------------------|
| 1 | 16 |

Bits:

# FIG. 21

Obtaining control information related to
Tone Plan (or RU) ~S2110

Configuring a PPDU based on
the obtained control information ~S2120

Transmitting the PPDU ~S2130

# FIG. 22

| Receiving a PPDU | S2210 |

↓

| Decoding the PPDU and obtaining control information related to Tone plane (or RU) | S2220 |

↓

| Decoding a data field based on the RU | S2230 |

# FIG. 23

transmitting, by a transmitting station (STA), a null data packet announcement (NDPA) frame to a receiving STA through a wideband ~ S2310

transmitting, by the transmitting STA, an NDP frame to the receiving STA ~ S2320

receiving, by the transmitting STA, a feedback frame based on the NDPA frame and the NDP frame from the receiving STA ~ S2330

# FIG. 24

```
┌────────────────────────────────────┐
│ receiving, by a receiving station (STA), a Null Data │
│ Packet Announcement (NDPA) frame from a              │      ⌐ S2410
│ transmitting STA through a wideband                  │
└────────────────────────────────────┘
                    │
                    ▼
┌────────────────────────────────────┐
│ receiving, by the receiving STA, an                  │
│ NDP frame from the transmitting STA                  │      ⌐ S2420
└────────────────────────────────────┘
                    │
                    ▼
┌────────────────────────────────────┐
│ transmitting, by the receiving STA, a feedback       │
│ frame to the transmitting STA based on the NDPA      │      ⌐ S2430
│ frame and the NDP frame                              │
└────────────────────────────────────┘
```

## INTERNATIONAL SEARCH REPORT

International application No.

**PCT/KR2023/002850**

### A. CLASSIFICATION OF SUBJECT MATTER

**H04W 72/04**(2009.01)i; **H04W 72/54**(2023.01)i; **H04W 84/12**(2009.01)i; **H04B 7/0413**(2017.01)i; **H04L 1/00**(2006.01)i; **H04L 5/00**(2006.01)i; **H04W 72/23**(2023.01)i

According to International Patent Classification (IPC) or to both national classification and IPC

### B. FIELDS SEARCHED

Minimum documentation searched (classification system followed by classification symbols)

H04W 72/04(2009.01); H04B 7/0417(2017.01); H04B 7/06(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NDPA(Null Data Packet Announcement), NDP, 피드백(feedback), STA 정보 필드 (STA Info field), 일부 대역에 대한 정보(partial bw info), Reserved bit, bitmap, 가장 낮은 주파수(lowest frequency), 가장 높은 주파수(highest frequency), 320MHz, MSB, LSB

### C. DOCUMENTS CONSIDERED TO BE RELEVANT

| Category* | Citation of document, with indication, where appropriate, of the relevant passages | Relevant to claim No. |
|---|---|---|
| Y | US 2022-0038241 A1 (QUALCOMM INCORPORATED) 03 February 2022 (2022-02-03) See paragraphs [0080]-[0104]; and claims 1 and 3-4. | 1-5,9-15,18-20 |
| A | | 6-8,16-17 |
| Y | LEE, Wook Bong et al. Proposed Draft Text (PDT-Joint): Fix TBDs in Spatial Stream and MIMO Protocol Enhancement Part 1. IEEE 802.11-21/0137r4. 03 February 2021. See pages 4-7; and figures 9-61e and 9-61f. | 1-5,9-15,18-20 |
| A | PARK, Eunsung et al. Partial BW Info Field Design in NDPA. IEEE 802.11-20/1814r4. 04 January 2021. See slides 2-11. | 1-20 |
| A | US 2021-0409078 A1 (SAMSUNG ELECTRONICS CO., LTD.) 30 December 2021 (2021-12-30) See paragraphs [0047]-[0333]. | 1-20 |
| A | US 2017-0054542 A1 (QUALCOMM INCORPORATED) 23 February 2017 (2017-02-23) See paragraphs [0058]-[0244]. | 1-20 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **24 May 2023** | **25 May 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT | | | | International application No. | |
|---|---|---|---|---|---|
| Information on patent family members | | | | PCT/KR2023/002850 | |

| Patent document cited in search report | | | Publication date (day/month/year) | Patent family member(s) | | | Publication date (day/month/year) |
|---|---|---|---|---|---|---|---|
| US | 2022-0038241 | A1 | 03 February 2022 | TW | 202211649 | A | 16 March 2022 |
| | | | | WO | 2022-026808 | A1 | 03 February 2022 |
| US | 2021-0409078 | A1 | 30 December 2021 | CN | 113938166 | A | 14 January 2022 |
| | | | | EP | 3934120 | A1 | 05 January 2022 |
| | | | | KR | 10-2022-0001412 | A | 05 January 2022 |
| | | | | KR | 10-2022-0001433 | A | 05 January 2022 |
| US | 2017-0054542 | A1 | 23 February 2017 | AR | 105954 | A1 | 29 November 2017 |
| | | | | AU | 2016-349261 | A1 | 19 April 2018 |
| | | | | BR | 112018008960 | A2 | 21 November 2018 |
| | | | | BR | 112018008960 | A8 | 26 February 2019 |
| | | | | CN | 107925462 | A | 17 April 2018 |
| | | | | CN | 108352878 | A | 31 July 2018 |
| | | | | CN | 108352878 | B | 20 August 2021 |
| | | | | EP | 3338375 | A1 | 27 June 2018 |
| | | | | EP | 3371897 | A1 | 12 September 2018 |
| | | | | EP | 3371897 | B1 | 15 July 2020 |
| | | | | ES | 2824531 | T3 | 12 May 2021 |
| | | | | HU | E050359 | T2 | 28 December 2020 |
| | | | | JP | 2018-538723 | A | 27 December 2018 |
| | | | | JP | 6625743 | B2 | 25 December 2019 |
| | | | | KR | 10-2018-0043266 | A | 27 April 2018 |
| | | | | KR | 10-2018-0080215 | A | 11 July 2018 |
| | | | | KR | 10-2078138 | B1 | 17 February 2020 |
| | | | | TW | 201713064 | A | 01 April 2017 |
| | | | | TW | 201720086 | A | 01 June 2017 |
| | | | | US | 10383092 | B2 | 13 August 2019 |
| | | | | US | 2017-0127385 | A1 | 04 May 2017 |
| | | | | WO | 2017-031451 | A1 | 23 February 2017 |
| | | | | WO | 2017-079381 | A1 | 11 May 2017 |

Form PCT/ISA/210 (patent family annex) (July 2022)